# EUROPEAN PATENT APPLICATION

(11) **EP 3 678 007 A1**
(43) Date of publication of application: **08.07.2020**
(21) Application number: 18873843.9
(22) Date of filing: 02.07.2018
(51) Int. Cl.: G06F 3/048

(54) **APPLICATION PROCESSING METHOD FOR TERMINAL DEVICE AND TERMINAL DEVICE**

(30) Priority: 30.10.2017 CN 201711031855; 17.04.2018 CN 201810343090
(71) Applicant: Huawei Technologies Co., Ltd., Longgang District Shenzhen, Guangdong 518129 (CN)
(72) Inventor: LU, Duojun, Shenzhen, Guangdong 518129 (CN)
(74) Representative: Pfenning, Meinig & Partner mbB
(86) International application number: PCT/CN2018/094078
(87) International publication number: WO 2019/085533

(57) **Abstract**

This application provides an application processing method and apparatus for a terminal device. The method includes: creating, based on a target type selected by a user, a target cloud folder associated with the target type; obtaining, based on the target type, at least one application pushed by a server; and installing a target application based on the target application selected by the user from the at least one application. Therefore, the cloud folder associated with the target type is created based on the target type selected by the user, thereby helping implement a classification function of the cloud folder and improving user experience.

## Description

This application claims priority to Chinese Patent Application No. 201711031855.0, filed with the Chinese Patent Office on October 30, 2017 and entitled "CLOUD FOLDER PROCESSING METHOD, TERMINAL, AND SERVER", which is incorporated herein by reference in its entirety.

### TECHNICAL FIELD

This application relates to the field of electronic devices, and more specifically, to an application processing method for a terminal device, and a terminal device.

### BACKGROUND

Operating systems of terminal devices all provide a folder function. With the folder function, a user can manage desktop applications conveniently, and classify applications with a similar function into a same folder, so as to resolve a problem that it is inconvenient to browse and search for an application when there are too many applications. As an extension of a folder, on a basis of inheriting application classification and accommodation functions, a cloud folder can recommend a similar application. To be specific, a cloud folder client on a terminal obtains a downloadable application from a cloud server, and recommends the application to the user.

An existing pre-installed cloud folder can obtain, based on a type of the folder, an application that is associated with the type and that is pushed by a server, but the pre-installed cloud folder cannot be restored after being deleted because the pre-installed cloud folder inherits a system folder characteristic of a terminal device. To be specific, when there is only one application remaining in the cloud folder after an application in the cloud folder is deleted or moved out, the cloud folder is deleted unless an operating system of the terminal device is re-installed or factory settings are restored. In addition, a non-preinstalled cloud folder (for example, a cloud folder extended by the terminal device from a common folder according to a subsequent user requirement) can obtain only a general recommendation, and an application with a dissimilar function may be recommended. As a result, there are miscellaneous applications in the cloud folder, a native classification function of a folder is lost, management is not easy, and user experience is severely affected.

### SUMMARY

According to an application processing method provided in this application, a cloud folder associated with a target type selected by a user may be created based on the target type, so as to improve user experience.

According to a first aspect, an application processing method for a terminal device is provided. The method includes:
obtaining a first operation instruction that a user selects a target type of a to-be-created target cloud folder;
in response to the first operation instruction, creating the target cloud folder associated with the target type;
obtaining at least one application that is associated with the target type and that is pushed by a server, and displaying the at least one application in the target cloud folder; and
in response to a second operation instruction that the user selects a target application from the at least one application, installing the target application.

Therefore, according to the application processing method for a terminal device provided in this embodiment of this application, the terminal device creates the target cloud folder of the target type according to the first operation instruction that the user selects the target type, the at least one application is pushed to the user based on the target type, and the terminal device installs the target application according to the second operation instruction that the user selects the target application from the at least one application. On the one hand, the cloud folder associated with the target type can be created without re-installing an operating system of the terminal device or restoring factory settings; and on the other hand, a problem that there are miscellaneous applications in a non-preinstalled cloud folder is avoided, thereby effectively implementing classification and recommendation functions of the cloud folder, and improving user experience.

In a possible implementation, before the obtaining a first operation instruction that a user selects a target type of a to-be-created target cloud folder, the method further includes:
obtaining at least one cloud folder type, where the target type is a type selected by the user from the at least one cloud folder type.

Therefore, according to the application processing method for a terminal device provided in this embodiment of this application, the at least one cloud folder type is provided for the user to select from, so that the user can conveniently determine a cloud folder type, thereby improving user experience.

In a possible implementation, the obtaining at least one cloud folder type includes:
obtaining the at least one cloud file type from the server.

Therefore, according to the application processing method for a terminal device provided in this embodiment of this application, the terminal device obtains the at least one cloud folder type from the server, so that the target type that is of the target cloud folder and that is selected by the terminal device is a cloud folder type supported by the server, and it is convenient for the server to subsequently push at least one application associated with the target type.

In a possible implementation, the at least one cloud folder type is pushed by the server based on device information of the terminal device.

Therefore, according to the application processing method for a terminal device provided in this embodiment of this application, the server may feed back the cloud folder type based on the device information of the terminal device, so that the fed-back cloud folder type matches a model of the terminal device, that is, the fed-back cloud folder type is a cloud folder type that can be supported by the terminal device.

In a possible implementation, the obtaining at least one cloud folder type includes:
obtaining the pre-configured at least one cloud folder type from the terminal device.

In a possible implementation, the obtaining at least one cloud folder type includes:
after detecting a third operation instruction entered by the user, obtaining the at least one cloud folder type.

Therefore, according to the application processing method for a terminal device provided in this embodiment of this application, a manner of triggering, by using the third operation instruction entered by the user, the terminal device to obtain the cloud folder type is simple and convenient, and is easy to operate. Therefore, user experience is high.

In a possible implementation, after the obtaining at least one cloud folder type, the method further includes:
displaying the at least one cloud folder type on a display of the terminal device.

In a possible implementation, the in response to the first operation instruction, creating the target cloud folder associated with the target type includes:
in response to the first operation instruction, creating the target cloud folder.

Therefore, according to the application processing method for a terminal device provided in this embodiment of this application, a manner of re-creating the target cloud folder according to the first operation instruction that the user selects the target type of the to-be-created target cloud folder is simple and convenient, and is easy to implement. The cloud folder associated with the target type can be created without re-installing an operating system of the terminal device or restoring factory settings. Therefore, user experience is high.

In a possible implementation, the obtaining a first operation instruction that a user selects a target type of a to-be-created target cloud folder includes:
obtaining an operation instruction that the user adds the target type to an existing folder; and
the in response to the first operation instruction, creating the target cloud folder associated with the target type includes:
   in response to the operation instruction that the user adds the target type to the existing folder, updating the folder to create the target cloud folder.

In a possible implementation, the obtaining a first operation instruction that a user selects a target type of a to-be-created target cloud folder includes:
obtaining an operation instruction that the user changes a type of an existing cloud folder to the target type; and
the in response to the first operation instruction, creating the target cloud folder associated with the target type includes:
   in response to the operation instruction that the user changes the type of the existing cloud folder to the target type, updating the cloud folder to create the target cloud folder.

In the foregoing two possible implementations, a type can also be selected for a non-preinstalled cloud folder, for obtaining an application associated with the type. Therefore, user experience is high.

In a possible implementation, after the in response to the first operation instruction, creating the target cloud folder associated with the target type, the method further includes:
storing a parameter of the target cloud folder, where the parameter includes at least one of the following: a name of the target cloud folder, a type of the target cloud folder, a sequence number of the target cloud folder on the display of the terminal device, or a location of the target cloud folder on the display of the terminal device.

Therefore, according to the application processing method for a terminal device provided in this embodiment of this application, after the target cloud folder is created, the parameter of the target cloud folder is stored, so that the parameter of the target cloud folder is not lost when the terminal device is restarted.

In a possible implementation, after the in response to the first operation instruction, creating the target cloud folder associated with the target type, the method further includes:
displaying the target cloud folder on the display of the terminal device.

In a possible implementation, the obtaining at least one application that is associated with the target type and that is pushed by a server, and displaying the at least one application in the target cloud folder includes:
after detecting a fourth operation instruction entered by the user for the target cloud folder, obtaining the at least one application that is associated with the target type and that is pushed by the server, and displaying the at least one application in the target cloud folder.

In a possible implementation, the in response to a second operation instruction that the user selects a target application from the at least one application, installing the target application includes:
in response to the second operation instruction, displaying, on the display of the terminal device, a download link used for downloading the target application; and
in response to an operation performed on the download link of the target application, installing the target application.

According to a second aspect, a terminal device is provided. The terminal device includes a processor, a memory, and a display, and the processor is configured to:
obtain a first operation instruction that a user selects a target type of a to-be-created target cloud folder;
in response to the first operation instruction, create the target cloud folder associated with the target type;
obtain at least one application that is associated with the target type and that is pushed by a server, and display the at least one application in the target cloud folder; and
in response to a second operation instruction that the user selects a target application from the at least one application, install the target application.

Therefore, the terminal device provided in this embodiment of this application creates the target cloud folder of the target type according to the first operation instruction that the user selects the target type, the at least one application is pushed to the user based on the target type, and the terminal device installs the target application according to the second operation instruction that the user selects the target application from the at least one application. On the one hand, the cloud folder associated with the target type can be created without re-installing an operating system of the terminal device or restoring factory settings; and on the other hand, a problem that there are miscellaneous applications in a non-preinstalled cloud folder is avoided, thereby effectively implementing classification and recommendation functions of the cloud folder, and improving user experience.

In a possible implementation, the processor is further configured to:
obtain at least one cloud folder type, where the target type is a type selected by the user from the at least one cloud folder type.

Therefore, the terminal device provided in this embodiment of this application provides the at least one cloud folder type for the user to select from, so that the user can conveniently determine a cloud folder type, thereby improving user experience.

In a possible implementation, the processor is specifically configured to:
obtain the at least one cloud file type from the server.

Therefore, the terminal device provided in this embodiment of this application obtains the at least one cloud folder type from the server, so that the target type that is of the target cloud folder and that is selected by the terminal device is a cloud folder type supported by the server, and it is convenient for the server to subsequently push at least one application associated with the target type.

In a possible implementation, the at least one cloud folder type is pushed by the server based on device information of the terminal device.

Therefore, for the terminal device provided in this embodiment of this application, the server may feed back the cloud folder type based on the device information of the terminal device, so that the fed-back cloud folder type matches a model of the terminal device, that is, the fed-back cloud folder type is a cloud folder type that can be supported by the terminal device.

In a possible implementation, the processor is specifically configured to:
obtain the pre-configured at least one cloud folder type from the terminal device.

In a possible implementation, the processor is specifically configured to:
after detecting a third operation instruction entered by the user, obtain the at least one cloud folder type.

Therefore, for the terminal device provided in this embodiment of this application, a manner of triggering, by using the third operation instruction entered by the user, the terminal device to obtain the cloud folder type is simple and convenient, and is easy to operate. Therefore, user experience is high.

In a possible implementation, the display is configured to:
display the at least one cloud folder type.

In a possible implementation, the processor is specifically configured to:
in response to the first operation instruction, create the target cloud folder.

Therefore, for the terminal device provided in this embodiment of this application, a manner of re-creating the target cloud folder according to the first operation instruction that the user selects the target type of the to-be-created target cloud folder is simple and convenient, and is easy to implement. The cloud folder associated with the target type can be created without re-installing an operating system of the terminal device or restoring factory settings. Therefore, user experience is high.

In a possible implementation, the processor is specifically configured to:
obtain an operation instruction that the user adds the target type to an existing folder; and
in response to the operation instruction that the user adds the target type to the existing folder, update the folder to create the target cloud folder.

In a possible implementation, the processor is specifically configured to:
obtain an operation instruction that the user changes a type of an existing cloud folder to the target type; and
in response to the operation instruction that the user changes the type of the existing cloud folder to the target type, update the cloud folder to create the target cloud folder.

In the foregoing two possible implementations, a type can also be selected for a non-preinstalled cloud folder, for obtaining an application associated with the type. Therefore, user experience is high.

In a possible implementation, the memory is configured to:
store a parameter of the target cloud folder, where the parameter includes at least one of the following: a name of the target cloud folder, a type of the target cloud folder, a sequence number of the target cloud folder on the display of the terminal device, or a location of the target cloud folder on the display of the terminal device.

Therefore, for the terminal device provided in this embodiment of this application, after the target cloud folder is created, the parameter of the target cloud folder is stored, so that the parameter of the target cloud folder is not lost when the terminal device is restarted.

In a possible implementation, the display is further configured to:
display the target cloud folder.

In a possible implementation, the processor is specifically configured to:
after detecting a fourth operation instruction entered by the user for the target cloud folder, obtain the at least one application that is associated with the target type and that is pushed by the server, and display the at least one application in the target cloud folder.

In a possible implementation, the processor is specifically configured to:
in response to the second operation instruction, control the display to display, on the display, a download link used for downloading the target application; and
in response to an operation performed on the download link of the target application, install the target application.

According to a third aspect, an application processing apparatus for a terminal device is provided. The apparatus may be configured to perform an operation in any one of the first aspect or the possible implementations of the first aspect. Specifically, the apparatus may include a module unit configured to perform each operation in any one of the first aspect or the possible implementations of the first aspect.

According to a fourth aspect, a computer program product is provided. The computer program product includes computer program code. When the computer program code is run by a terminal device, the terminal device is enabled to perform the method in any one of the first aspect or the possible implementations of the first aspect.

According to a fifth aspect, a computer readable storage medium is provided. The computer readable storage medium stores a program, and the program enables a terminal device to perform the method in any one of the first aspect or the possible implementations of the first aspect.

According to a sixth aspect, a computer program is provided. When the computer program is executed on a computer, the computer is enabled to perform the method in any one of the first aspect or the possible implementations of the first aspect.

### BRIEF DESCRIPTION OF DRAWINGS

FIG. 1 is a block diagram of a partial structure of a mobile phone 100 according to an embodiment of this application;
FIG. 2 is a schematic flowchart of an application processing method for a terminal device according to an embodiment of this application;
FIG. 3 to FIG. 7 are schematic diagrams of human-computer interaction interfaces according to an embodiment of this application;
FIG. 8 to FIG. 13 are schematic diagrams of human-computer interaction interfaces of a target cloud folder according to an embodiment of this application;
FIG. 14 to FIG. 16 are schematic flowcharts of an application processing method for a terminal device according to another embodiment of this application; and
FIG. 17 shows an application processing apparatus for a terminal device according to an embodiment of this application.

### DESCRIPTION OF EMBODIMENTS

The following describes technical solutions of this application with reference to accompanying drawings.

The embodiments of this application may be applied to all terminal devices (also referred to as user equipment) supporting a cloud folder function, for example, a mobile phone, a wristband, a tablet computer, a notebook computer, an ultra-mobile personal computer (ultra-mobile personal computer, UMPC), a personal digital assistant (personal digital assistant, PDA) device, a handheld device with a wireless communication function, a computing device or another processing device connected to a wireless modem, a vehicle-mounted device, or a wearable device. The terminal devices are not limited to a communications terminal.

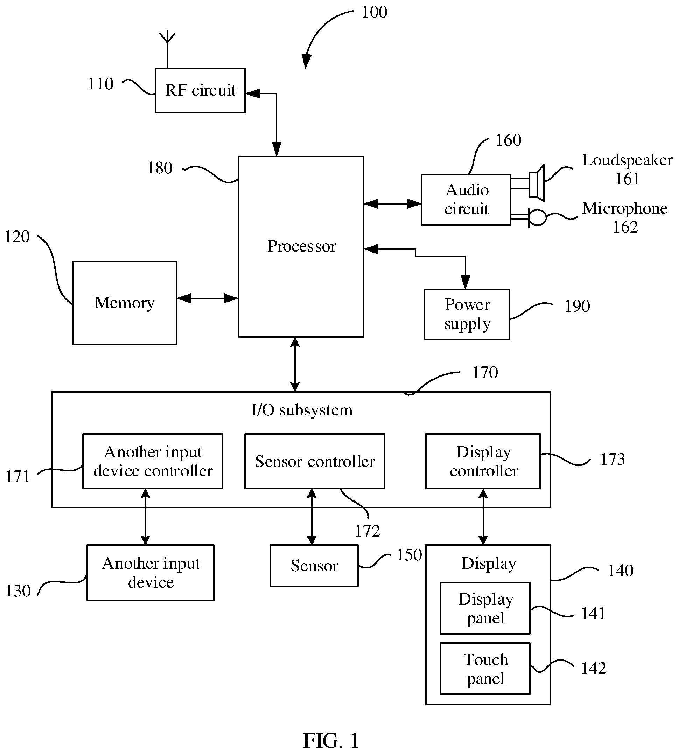

The following describes in detail, by using an example in which the terminal device is a mobile phone, a structure of a mobile phone 100 with reference to a schematic block diagram of a partial structure of the mobile phone 100 shown in FIG. 1. It should be understood that the mobile phone shown in FIG. 1 is merely an example of a terminal device, and the embodiments of this application are not limited thereto.

As shown in FIG. 1, the mobile phone 100 includes components such as a radio frequency (radio frequency, RF) circuit 110, a memory 120, another input device 130, a display 140, a sensor 150, an audio circuit 160, an I/O subsystem 170, a processor 180, and a power supply 190.

The RF circuit 110 may be configured to receive and send signals in an information receiving/sending process or a call process. In particular, after receiving downlink information from a base station, the RF circuit 110 sends the downlink information to the processor 180 for processing; and sends uplink-related data to the base station. The RF circuit usually includes but is not limited to an antenna, at least one amplifier, a transceiver, a coupler, a low noise amplifier (low noise amplifier, LNA), and a duplexer. In addition, the RF circuit 110 may also perform wireless communication with a network and another device. Any communication standard or protocol may be used for the wireless communication, including but not limited to: global system for mobile communications (global system of mobile communication, GSM), general packet radio service (general packet radio service, GPRS), code division multiple access (code division multiple access, CDMA), wideband code division multiple access (wideband code division multiple access, WCDMA), long term evolution (long term evolution, LTE), email, and short message service (short messaging service, SMS).

The memory 120 may be configured to store a software program and a module. The processor 180 executes various function applications and data processing of the mobile phone 100 by running the software program and the module that are stored in the memory 120. The memory 120 may mainly include a program storage area and a data storage area. The program storage area may store an operating system, an application program required by at least one function (such as a voice playback function and an image playback function), and the like. The data storage area may store data (such as audio data and a phone book) created based on use of the mobile phone 100, and the like. In addition, the memory 120 may include a high-speed random access memory, and may alternatively include a nonvolatile memory, for example, at least one magnetic disk storage device or a flash memory device, or another volatile solid-state storage device.

The another input device 130 may be configured to receive input digit or character information, and generate key signal input related to user setting and function control of the mobile phone 100. Specifically, the another input device 130 may include but is not limited to one or more of a physical keyboard, a function key (such as a volume control key or an on/off key), a trackball, a mouse, a joystick, an optical mouse (the optical mouse is a touch-sensitive surface that does not display visual output, or an extension of a touch-sensitive surface formed by a touchscreen), and the like. The another input device 130 is connected to an another input device controller 171 in the I/O subsystem 170, and performs signal exchange with the processor 180 under control of the another input device controller 171.

The display 140 may be configured to display information entered by a user or information provided for a user, and various menus of the mobile phone 100, and may further accept user input.

Specifically, the display 140 may include a display panel 141 and a touch panel 142. The display panel 141 may be configured in a form of a liquid crystal display (liquid crystal display, LCD), an organic light-emitting diode (organic light-emitting diode, OLED), or the like. The touch panel 142, also referred to as a touchscreen, a touch-sensitive screen, or the like, may collect a touch or non-touch operation performed by a user on or near the touch panel 142 (for example, an operation performed by the user on or near the touch panel 142 by using any proper object or accessory, such as a finger or a stylus, or may include a motion sensing operation, where the operation includes an operation type such as a single-point control operation or a multi-point control operation), and drive a corresponding connecting apparatus according to a preset program.

Optionally, the touch panel 142 may include two parts: a touch detection apparatus and a touch controller. The touch detection apparatus detects a touch orientation and a posture that are of the user, detects a signal generated by a touch operation, and transmits the signal to the touch controller. The touch controller receives touch information from the touch detection apparatus, converts the touch information into information that can be processed by the processor, and sends the information to the processor 180, and is capable of receiving and executing a command sent by the processor 180. In addition, the touch panel 142 may be implemented by using a plurality of types, such as a resistive type, a capacitive type, an infrared type, and a surface acoustic wave type, and the touch panel 142 may be alternatively implemented by using any technology developed in the future.

Further, the touch panel 142 may cover the display panel 141. The user may perform, based on content displayed on the display panel 141 (the displayed content includes but is not limited to a soft keyboard, a virtual mouse, a virtual key, and an icon), an operation on or near the touch panel 142 that covers the display panel 141. After detecting an operation on or near the touch panel 142, the touch panel 142 transmits information about the operation to the processor 180 by using the I/O subsystem 170 to determine user input, and then the processor 180 provides corresponding visual output on the display panel 141 based on the user input by using the I/O subsystem 170.

It should be understood that in FIG. 1, the touch panel 142 and the display panel 141 are used as two independent components to implement input and output functions of the mobile phone 100. However, in some embodiments, the touch panel 142 and the display panel 141 may be integrated to implement the input and output functions of the mobile phone 100.

The mobile phone 100 may further include at least one sensor 150, such as a light sensor, a motion sensor, or another sensor.

Specifically, the light sensor may include an ambient light sensor and a proximity sensor. The ambient light sensor may adjust luminance of the display panel 141 based on brightness of ambient light. The proximity sensor may turn off the display panel 141 and/or backlight when the mobile phone 100 moves near an ear. As a type of motion sensor, an accelerometer sensor may detect acceleration magnitudes in all directions (usually in three axes), may detect a magnitude and a direction of gravity when the accelerometer sensor is stationary, and may be configured to recognize a posture application of the mobile phone (such as landscape/portrait mode switching, related games, and magnetometer posture calibration), a vibration recognition-related function (such as a pedometer and a stroke), and the like. For other sensors that may be further configured for the mobile phone 100, such as a gyroscope, a barometer, a hygrometer, a thermometer, and an infrared sensor, details are not described herein.

The audio circuit 160, a loudspeaker 161, and a microphone 162 can provide an audio interface between the user and the mobile phone 100. The audio circuit 160 may transmit, to the loudspeaker 161, a signal that is obtained after conversion of received audio data, and the loudspeaker 161 converts the signal into a sound signal and outputs the sound signal. In addition, the microphone 162 converts a collected sound signal into a signal; the audio circuit 160 receives the signal, converts the signal into audio data, and outputs the audio data to the RF circuit 108; and then the audio data is sent to, for example, another mobile phone, or the audio data is output to the memory 120 for further processing.

The I/O subsystem 170 is configured to control an external input/output device, and may include the another input device controller 171, a sensor controller 172, and a display controller 173. Optionally, one or more another input control device controllers 171 receive a signal from the another input device 130 and/or send a signal to the another input device 130. The another input device 130 may include a physical button (a push button, a rocker button, or the like), a dial, a slider switch, a joystick, a click scroll wheel, or an optical mouse (the optical mouse is a touch-sensitive surface that does not display visual output, or an extension of a touch-sensitive surface formed by a touchscreen).

It should be noted that the another input control device controller 171 may be connected to any one or more of the foregoing devices. The display controller 173 in the I/O subsystem 170 receives a signal from the display 140 and/or sends a signal to the display 140. After the display 140 detects user input, the display controller 173 converts the detected user input into interaction with a user interface object displayed on the display 140, that is, implements human-computer interaction. The sensor controller 172 may receive a signal from one or more sensors 150 and/or send a signal to the one or more sensors 150.

The processor 180 is a control center of the mobile phone 100, is connected to all the parts of the entire mobile phone by using various interfaces and lines, and by running or executing the software program and/or the module that are/is stored in the memory 120 and by invoking data stored in the memory 120, performs various functions and data processing of the mobile phone 100, so as to perform overall monitoring on the mobile phone.

Optionally, the processor 180 may include one or more processing units. Preferably, an application processor and a modem processor may be integrated into the processor 180, where the application processor mainly processes an operating system, a user interface, an application program, and the like, and the modem processor mainly processes wireless communication.

It may be understood that the foregoing modem processor may be alternatively not integrated in the processor 180.

It should be noted that because the another input device 130, the sensor 150, and the display 140 may all receive various signals from the outside of the mobile phone 100, and finally, the processor 180 performs data processing on the received signals and performs various functions, for the processor 180, the another input device 130, the sensor 150, and the display 140 may all be considered as input devices.

The mobile phone 100 further includes the power supply 190 (for example, a battery) that supplies power to all the components. Preferably, the power supply may be logically connected to the processor 180 by using a power management system, so that functions such as charging and discharging management and power consumption management are implemented by using the power management system.

The mobile phone 100 may further include a camera module, a Bluetooth module, an infrared module, and the like, although they are not shown. Details are not described herein.

A person skilled in the art may understand that a mobile phone structure shown in FIG. 1 does not constitute any limitation on the mobile phone, and the mobile phone may include components more or fewer than those shown in the figure, or some components are combined, or some components are split, or the components are disposed differently.

The following briefly describes a cloud folder in the embodiments of this application.

A folder may be a collection of startup files of a terminal device. A startup file may be used to start up a corresponding application. By using a folder, a user can manage desktop applications conveniently, and classify applications with a similar function into a same folder, so as to resolve a problem that it is inconvenient to browse and search for an application when there are too many applications. In other words, there may be several application program startup files with a similar function in one folder, and with the folder, the application program startup files may be classified and accommodated. In addition, the user may drag an application program startup file into a folder, drag an application program startup file out of a folder, and display application program startup files in a folder. The application file startup file may be a startup icon, that is, an icon that is used to identify an application and that is on a desktop of a terminal.

By inheriting basic functions of the folder, the cloud folder is a folder with classification and recommendation functions. To be specific, the cloud folder not only has all functions of the common folder, but a more important feature is that the cloud folder has the application classification and recommendation functions. Specifically, applications that have not been installed by the user but belong to a same category or other information may be displayed in a cloud folder, for recommending the applications to the user. The user may view attribute information related to the applications, and selectively download an application and install the application.

A cloud folder type is an attribute category of an application added or recommended in a cloud folder. For example, the cloud folder type may be social life, entertainment, or easy work. Specifically, in a cloud folder of the social life type, applications such as WeChat, QQ, and Baidu Map may be added or recommended; in a cloud folder of the entertainment type, applications such as Tencent Video and Kugou Music may be added or recommended; and in a cloud folder of the easy work type, applications such as WPS Office and Youdao Dictionary may be added or recommended.

In the embodiments of this application, in response to an operation instruction that a user selects a target type of a to-be-created target cloud folder, a terminal device creates the target cloud folder; pushes, to the user, at least one application that is associated with the target type and that is obtained from a server, so that the user can select a target application from the at least one application; and further, the terminal device downloads and installs the target application. In this way, on the one hand, the cloud folder associated with the target type can be created without re-installing an operating system of the terminal device or restoring factory settings; and on the other hand, a problem that there are miscellaneous applications in a non-preinstalled cloud folder is avoided, thereby effectively implementing classification and recommendation functions of the cloud folder, and improving user experience.

It should be noted that the target type in this specification may be an application type that is used to be associated with a cloud folder and that is selected by the user, and the target cloud folder in this specification may be a cloud folder associated with the target type, and the target cloud folder may receive an application that is associated with the target type and that is pushed by the server.

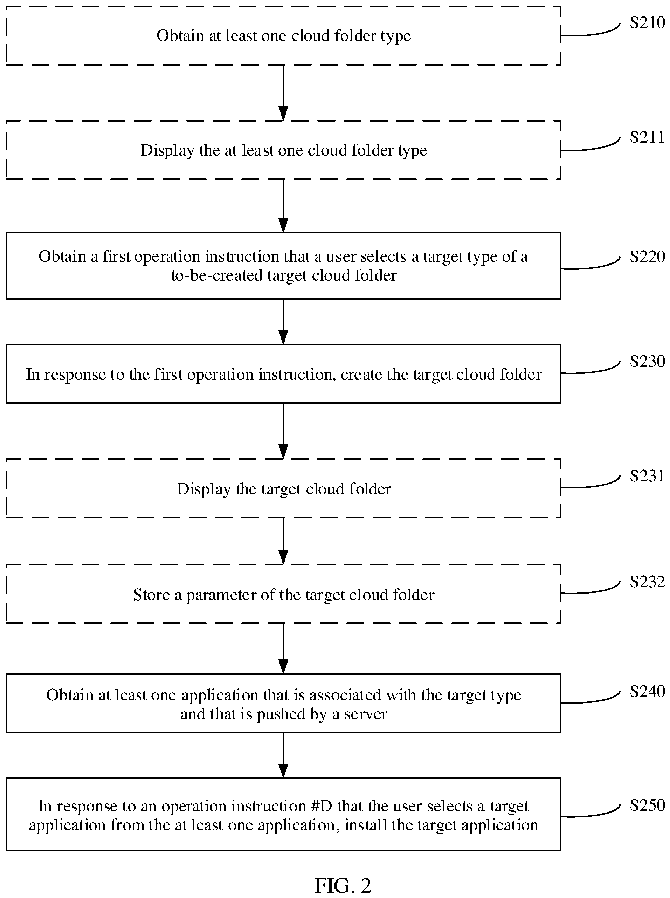

For ease of understanding and description, the following describes an embodiment of this application in detail with reference to FIG. 2 to FIG. 13 by using the mobile phone 100 as an example and as an entity for performing the application processing method in the embodiments of this application.

FIG. 2 shows a schematic process of an application processing method 200 for a terminal device according to an embodiment of this application. The following describes steps in the method 200 in detail. Step S210: Obtain at least one cloud folder type.

In this embodiment of this application, the mobile phone 100 may obtain the at least one cloud folder type in two manners. The following describes the two manners in detail.

### Manner A

Obtain the at least one cloud folder type from the server. A specific implementation process is as follows:
sending, by the mobile phone 100, a first request message to the server, where the first request message is used to request at least one cloud folder type; and
receiving, by the mobile phone 100, a first response message sent by the server based on the first request message, where the first response message is used to indicate the at least one type.

In this way, the mobile phone 100 obtains the at least one cloud folder type from the server, so that a target type that is of a to-be-created target cloud folder and that is selected by the mobile phone 100 is a cloud folder type that can be supported by the server, thereby improving user experience.

It should be noted that the server in this embodiment of this application may be a conventional physical cloud server, or may be a cloud server. The cloud server is a simple, efficient, secure, and reliable computing service with a scalable processing capability. Compared with the physical server, the cloud server is easier to manage and features higher management efficiency. A user can quickly create or release any quantity of cloud servers without purchasing hardware in advance.

In a possible implementation, the at least one cloud folder type is pushed by the server based on device information of the mobile phone 100. The device information of the mobile phone 100 may include information about an attribute of the mobile phone 100 such as a model of the mobile phone 100 and/or an operating system of the mobile phone 100.

Specifically, the server stores cloud folder types that can be supported by mobile phones of a plurality of types. The mobile phone 100 sends, to the server, the first request message that includes the device information of the mobile phone 100. After obtaining the device information of the mobile phone 100 from the first request information, the server may determine, based on the device information of the mobile phone 100, a cloud folder type that can be supported by the mobile phone 100, and further, feed back, by using the first response message, the cloud folder type that can be supported by the mobile phone 100.

In this way, the server feeds back the cloud folder type based on the device information of the mobile phone 100, so that the cloud folder type fed back by the server matches the mobile phone 100, that is, the fed-back cloud folder type is a cloud folder type that can be supported by the mobile phone 100.

As an example instead of a limitation, the first request message may further include a version of a read-only memory (read-only memory, ROM).

In the manner A, the mobile phone 100 may obtain the at least one cloud folder type after detecting a third operation instruction entered by the user. The third operation instruction may be an instruction of a touch operation performed by the user in a blank area on the display 140. The touch operation may be a touch and hold operation, a flick operation, a touch operation, or the like. Herein, the display 140 includes the display panel 141 and the touch panel 142. The touch panel 142 includes the touch detection apparatus and the touch controller. Alternatively, the third operation instruction may be a voice instruction entered by the user by using the microphone 162. Any operation instruction capable of enabling the user to interact with the mobile phone 100 falls within the protection scope of the embodiments of this application. This is not limited in this embodiment of this application.

It may be understood that the third operation instruction entered by the user may be considered as a trigger condition for obtaining the at least one cloud folder type by the mobile phone 100.

Specifically, after detecting the third operation instruction entered by the user, the mobile phone 100 may determine that the user needs to create a cloud folder by selecting a cloud folder type, and therefore obtains at least one cloud folder type from the server.

For example, the third operation instruction is an instruction of a touch and hold operation. If the user needs to select a cloud folder type, the user may touch and hold a blank area on the display 140. After detecting the touch and hold operation entered by the user, the touch detection apparatus transmits a signal of the touch and hold operation to the touch controller. The touch controller converts the signal of the touch and hold operation into a signal that can be processed by the processor 180, and then sends the signal to the processor 180. In this way, the processor 180 may obtain the touch and hold operation performed by the user.

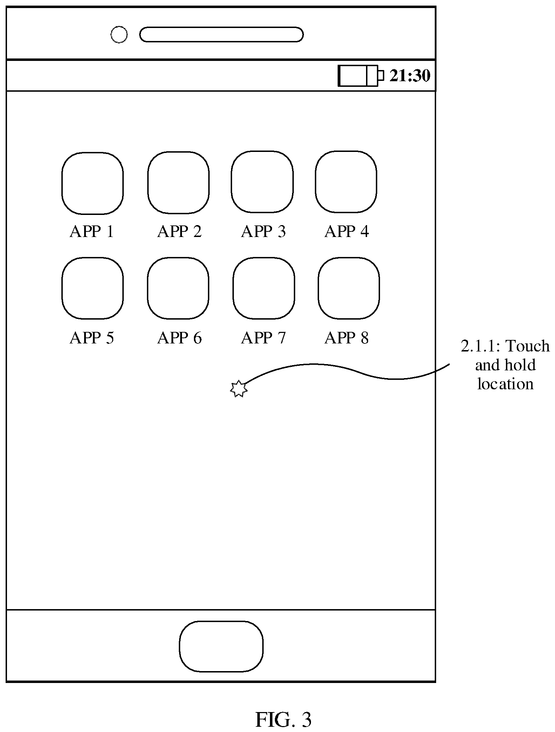

FIG. 3 is a schematic diagram of a human-computer interaction interface according to an embodiment of this application. APP 1 to APP 8 are applications already installed on the mobile phone 100. When the user needs to select a cloud folder type, the user may perform a touch and hold operation in a blank area (for example, a touch and hold location indicated by 2.1.1) on the display 140. After detecting the touch and hold operation, the mobile phone 100 obtains a cloud folder type from the server.

Certainly, the foregoing example in which the third operation instruction is a touch and hold operation is merely a schematic description, and shall not constitute a limitation on this embodiment of this application. For example, the terminal device may alternatively obtain the at least one cloud folder type after receiving a related signal sent by a sound control device. Specifically, the user may say a sentence such as "I want to create a cloud folder" by using the microphone of the mobile phone 100. After receiving this signal, the mobile phone 100 determines that the mobile phone 100 first needs to select a cloud folder type, and therefore obtains the at least one cloud folder type.

### Manner B

Obtain the pre-configured at least one cloud folder type from the mobile phone 100.

To be specific, at least one cloud folder type that can be supported by the operating system of the mobile phone 100 is pre-stored in the mobile phone 100. The mobile phone 100 may directly obtain the at least one cloud folder type from the pre-stored at least one cloud folder type for the user to select from.

Likewise, in the manner B, the mobile phone 100 may obtain the at least one cloud folder type after detecting the third operation instruction. The third operation instruction may be an instruction of a touch operation performed by the user on a pre-provided icon; or the third operation instruction may be an instruction of a touch and hold operation performed by the user on the display; or the third operation instruction may be a voice instruction entered by the user after the user touches a pre-provided icon, or the like. Any operation instruction capable of enabling the user to interact with the terminal device falls within the protection scope of the embodiments of this application. This is not limited in this embodiment of this application.

It may be understood that the third operation instruction entered by the user may be considered as a trigger condition for obtaining the at least one cloud folder type by the mobile phone 100.

For example, the third operation instruction is an instruction of a touch and hold operation. For a manner in which the mobile phone 100 obtains the at least one cloud folder type after detecting a touch and hold operation performed by the user on the display, refer to a specific description in the manner A about that the mobile phone 100 obtains the at least one cloud folder type after detecting a touch and hold operation performed by the user on the display. For brevity, details are not described herein again.

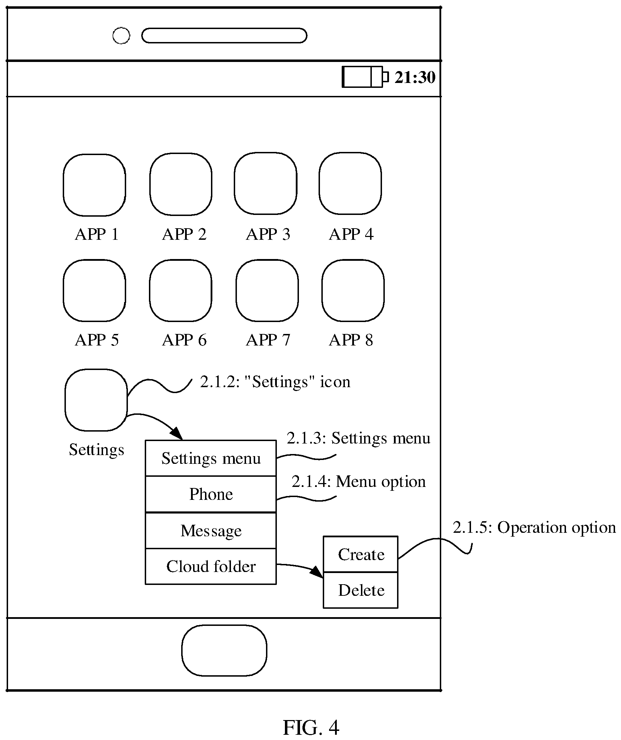

With reference to FIG. 4 and by using an example in which the third operation instruction is a touch operation, the following describes a specific process in which the mobile phone 100 obtains the at least one cloud folder type after detecting a touch operation performed by the user on a pre-provided icon.

FIG. 4 is a schematic diagram of another human-computer interaction interface according to an embodiment of this application. As shown in FIG. 4, an example in which the mobile phone 100 creates the target cloud folder is used, and APP 1 to APP 8 are applications already installed on the mobile phone 100. When the user needs to create a new cloud folder, the user touches a local application "Settings" indicated by 2.1.2. A settings menu indicated by 2.1.3 is popped up. The settings menu includes a plurality of menu options including "Cloud folder". The user touches the "Cloud folder" option, and a plurality of operation options related to the cloud folder are popped up. The operation options include at least a "Create" option indicated by 2.1.5. Optionally, the operation options may alternatively include a "Delete" option. In this way, according to a requirement of creating a cloud folder, the user touches the "Create" option on the display 140. In this case, the processor 180 can determine, based on a signal input by the display 140, that the user needs to create a cloud folder, further determine that the user first needs to select a cloud folder type, and therefore obtain the at least one cloud folder type from the mobile phone 100 for the user to select from.

It should be understood that the menu options shown in FIG. 4 are merely a schematic description, and shall not constitute a limitation on this embodiment of this application. Actually, the settings may include all menu options about locally installed applications.

S211: Display the at least one cloud folder type on the display.

To be specific, after the mobile phone 100 obtains the at least one cloud folder type that can be supported by the mobile phone 100, the processor 180 may control, by using the display controller 173, the display 140 to display the at least one type to the user, for the user to select the target type from the at least one type.

In this way, a selectable cloud folder type is provided for the user by using the display, so that the user can conveniently determine a cloud folder type, thereby improving user experience.

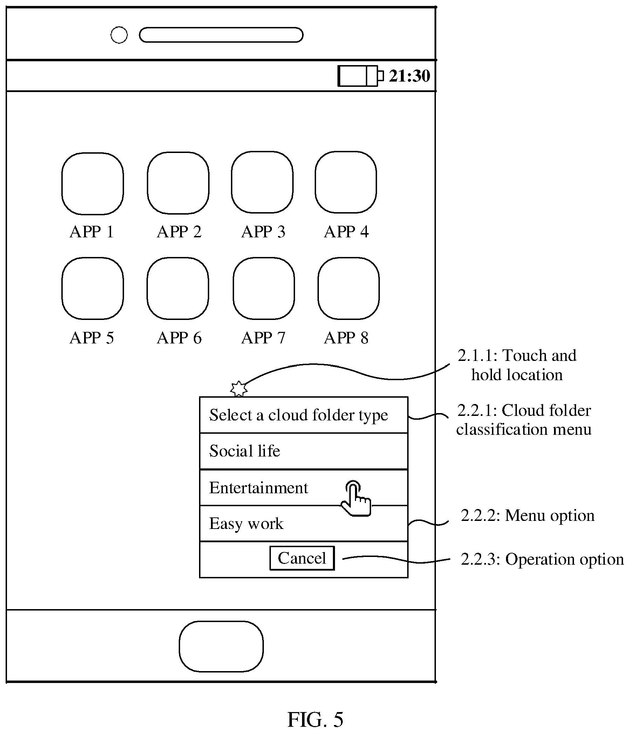

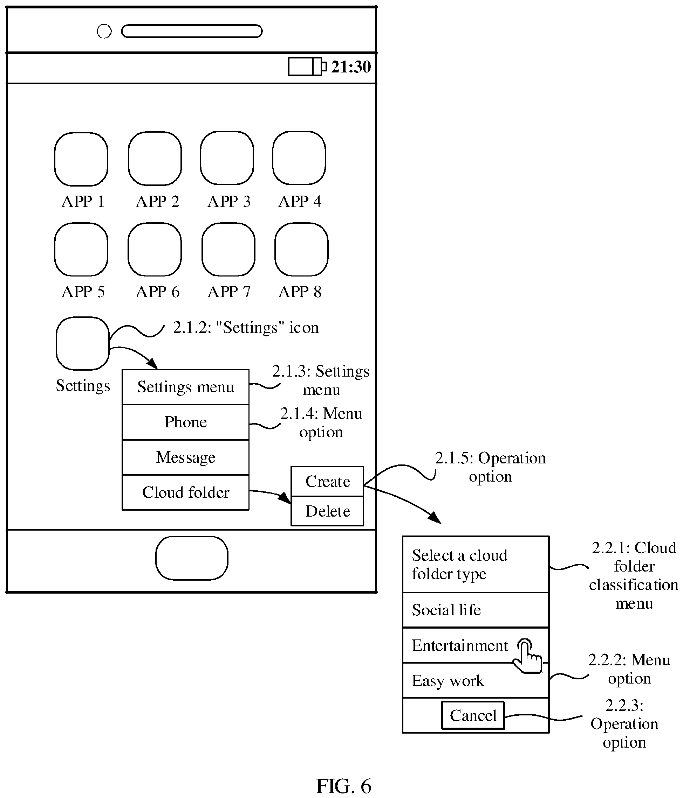

With reference to FIG. 5 and FIG. 6, the following describes a change process of a human-computer interaction interface of the mobile phone 100 based on the foregoing two manners of obtaining the at least one cloud folder type.

FIG. 5 is a schematic diagram of another human-computer interaction interface according to an embodiment of this application. As shown in FIG. 5, it is assumed that after detecting the touch and hold operation performed by the user on the display 140, the mobile phone 100 obtains at least one cloud folder type from the server, and controls, by using the display controller 173, the display 140 to display the cloud folder classification menu, that is, pop up a cloud folder classification menu indicated by 2.2.1. The cloud folder classification menu includes a plurality of menu options indicated by 2.2.2, and each menu option indicates a cloud folder type. In FIG. 5, the cloud folder classification menu indicates three cloud folder types: social life, entertainment, and easy work. It may be understood that classification herein is merely an example. This is not limited herein.

FIG. 6 is a schematic diagram of another human-computer interaction interface according to an embodiment of this application. As shown in FIG. 6, it is assumed that after detecting the touch operation performed by the user on the pre-provided icon "Settings" of a system, the mobile phone 100 pops up the settings menu indicated by 2.1.3; after detecting the touch operation performed by the user on "Cloud folder", the mobile phone 100 pops up at least one operation option including 2.1.5; and after detecting the touch operation performed by the user on the "Create" option, the mobile phone 100 controls, by using the display controller 173, the display 140 to display the cloud folder classification menu, that is, pop up a cloud folder classification menu indicated by 2.2.1. The cloud folder classification menu includes a plurality of menu options indicated by 2.2.2, and each menu option indicates a cloud folder type. In FIG. 6, the cloud folder classification menu indicates three cloud folder types: social life, entertainment, and easy work. Likewise, classification herein is merely an example. This is not limited herein.

After the mobile phone 100 displays the at least one cloud folder type by using the display 140, the user may select one from the three types as a target type according to an actual requirement. Specifically, the user may perform a touch operation on a location corresponding to the target type, to complete a process of selecting the target type.

Correspondingly, when detecting the touch operation performed by the user on a target location on the display 140, the processor 180 determines the target type corresponding to the target location.

In an implementation process, at least one cloud folder type corresponds to at least one location on the display 140, and each cloud folder type corresponds to one location. In other words, the mobile phone 100 clearly knows a location in which each cloud folder type is displayed on the display. Therefore, after the display 140 detects the touch operation performed by the user on the target location, the display controller 173 converts the detected touch operation into a signal that can be identified by the processor 180, and sends the signal to the processor 180. In other words, the touch operation performed by the user may be used to indicate the location on the display 140. In this way, the processor 180 can determine, based on the target location indicated by the signal of the touch operation, the target type corresponding to the target location.

Still as shown in FIG. 5 or FIG. 6, for example, if the target type is "Entertainment", the user may complete, by performing a touch operation on the menu option "Entertainment", a process of selecting the target type.

It should be understood that although the display is a device that directly detects a touch operation performed by the user, because the processor can receive, only when the touch operation is performed, a signal about the touch operation sent by the display controller, that the processor obtains the signal about the touch operation may be understood as that the processor detects the touch operation performed by the user.

It should be noted that when the terminal device is a computer including a display, the user may click a target location on the display by using a mouse, to select the target type from the at least one type. A processor may determine the target location based on an obtained signal of the click operation, so as to determine a target type corresponding to the target location.

It should be understood that to notify the user of the at least one cloud folder type obtained by the mobile phone 100 from a network device, as an example instead of a limitation, a manner of displaying the at least one cloud folder type on the display is merely a schematic description, and the mobile phone 100 may alternatively enable, in another manner, the user to determine the at least one cloud folder type.

For example, the mobile phone 100 may output the at least one cloud folder type by using a sound control device. Specifically, the processor 180 transmits, to the loudspeaker 161, a signal obtained after the audio circuit 160 converts audio data that is used to indicate the at least one cloud folder type, and then the loudspeaker 161 outputs a sound signal, that is, the loudspeaker 161 plays the at least one type.

For the user, the user may enter the determined target type by using the microphone 162. The microphone 162 converts a received sound signal into a signal, and the audio circuit 160 receives the signal, converts the signal into audio data, and sends the audio data to the processor 180. In this way, the processor 1810 can determine the target type based on the audio data.

Step S220: Obtain a first operation instruction that the user selects the target type of the to-be-created target cloud folder.

According to a requirement of the user for a cloud folder, the user may enter the first operation instruction by using an input device. In this way, the processor 180 in the mobile phone 100 obtains the first operation instruction by using the input device. Specifically, the input device may directly send, to the processor 180 in the mobile phone 100, a signal used to indicate the target type, or convert, by using another device, a signal used to indicate the target type into a signal that can be identified by the processor 180, and then send the processed signal to the processor 180. In this way, the signal finally obtained by the processor 180 is the first operation instruction.

The input device may be any device that can receive information entered by a user, such as a keyboard (for example, one of the another input device 130), a display (for example, the display 140), a sound control device (for example, the audio circuit 160, the loudspeaker 161, and the microphone 162), or a mouse (for example, one of the another input device 130). This is not limited in this embodiment of this application.

Correspondingly, input devices of different types correspond to different operation instructions (for example, the first operation instruction). For example, when the input device is the display 140, the display 140 includes the touch panel 142. The processor 180 obtains the first operation instruction by using a touch operation performed by the user on the touch panel 142. The first operation instruction may be an instruction of a touch operation entered by the user. The touch operation may be a touch operation, a touch and hold operation, a flick operation, a drag operation, or the like. When the input device is a sound control device, the sound control device may include the microphone 162 and the audio circuit 160. The user outputs, through a voice, a sound signal used to indicate the target type. The microphone 162 converts the collected sound signal into a signal, and the audio circuit 160 converts the received signal into audio data. The processor 180 uses, as the first operation instruction, the audio data or a signal obtained after the audio data is processed by another device. When the input device is the another input device 130 other than a device in the mobile phone 100 such as a keyboard, the processor 180 may obtain the first operation instruction by using a signal entered by the another input device 130.

As an example instead of a limitation, the mobile phone 100 may not need to obtain and display the at least one cloud folder type by performing the foregoing steps S210 and S211, and the user may not need to select the target type from the at least one cloud folder type either, and may directly enter the target type through a voice by using a sound control device (for example, the microphone 162).

Step S230: In response to the first operation instruction, create the target cloud folder associated with the target type.

In this embodiment of this application, the mobile phone 100 may create, in three manners, the target cloud folder according to the first operation instruction that the user selects the target type. The following separately describes the three manners.

### Manner 1

In response to the first operation instruction, create the target cloud folder.

To be specific, the mobile phone 100 creates a new cloud folder (that is, the target cloud folder) (or a cloud folder that does not exist in the mobile phone 100) in the mobile phone 100 based on the target type.

In this embodiment of this application, the user may create a cloud folder based on a plurality of cases. For example, no target cloud folder of the target type exists in the mobile phone 100; or a target cloud folder of the target type previously exists in the mobile phone 100 but is accidentally deleted by the user; or a cloud folder exists in the mobile phone 100, but the cloud folder does not have an attribute category (that is, classification and recommendation functions of a cloud folder cannot be implemented); or a cloud folder exists in the mobile phone 100, but a type of the cloud folder does not meet a current requirement of the user.

For a specific implementation, refer to descriptions related to FIG. 5 and FIG. 6. For brevity, details are not described herein again.

### Manner 2

The obtaining a first operation instruction that the user selects the target type of the to-be-created target cloud folder includes:
obtaining an operation instruction that the user adds the target type to an existing folder; and
the in response to the first operation instruction, creating the target cloud folder associated with the target type includes:
   in response to the operation instruction that the user adds the target type to the existing folder, updating the folder to create the target cloud folder.

In the manner 2, instead of creating a new cloud folder as described in the manner 1, an existing folder in the mobile phone 100 may be updated, to implement a process of creating a target cloud folder of the target type.

In a possible implementation, the folder is a common folder without classification and recommendation functions. In this case, a switch option used to enable or disable a recommendation function may be added to the common folder, to convert the common folder into a cloud folder with only a pushing function (although the pushing function is provided, applications pushed by the server include various types). In addition, the target type may be added to the cloud folder with only the pushing function, so that the cloud folder with only the pushing function is further updated to a target cloud folder that can recommend an application based on the target type.

In another possible implementation, the folder is a cloud folder with only a pushing function (although the pushing function is provided, applications pushed by the server include various types). The target type may be added to the cloud folder with only the pushing function, so that the cloud folder with only the pushing function is further updated to a target cloud folder that can recommend an application based on the target type.

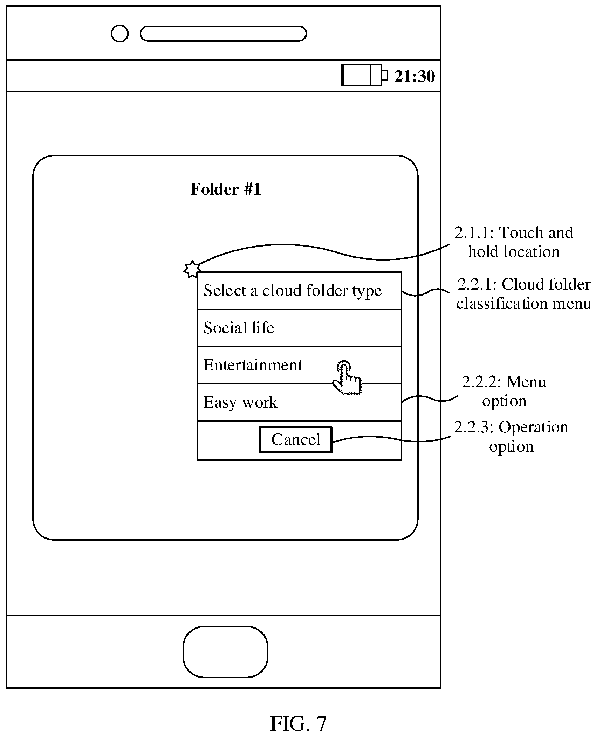

For a manner of adding a target type to a folder, refer to the foregoing manner A. As shown in FIG. 7, the user may perform a related operation (for example, a touch and hold operation or a tap operation) in a blank area in an existing folder (a folder #1) in the mobile phone 100. After detecting the operation performed by the user, the mobile phone 100 may obtain at least one cloud folder type from the server or the operating system of the mobile phone 100, and display the at least one cloud folder type. Then, based on a target type selected by the user from the at least one cloud folder type, the mobile phone 100 automatically updates the folder to a target cloud folder with classification and recommendation functions.

### Manner 3

The obtaining a first operation instruction that the user selects the target type of the to-be-created target cloud folder includes:
obtaining an operation instruction that the user changes a type of an existing cloud folder to the target type; and
the in response to the first operation instruction, creating the target cloud folder associated with the target type includes:
   in response to the operation instruction that the user changes the type of the existing cloud folder to the target type, updating the cloud folder to create the target cloud folder.

The existing cloud folder represents a cloud folder with classification and recommendation functions, and may be a cloud folder in the operating system when the mobile phone 100 is factory-set, or a pre-installed cloud folder.

Likewise, in the manner 3, instead of creating a new cloud folder as described in the manner 1, an existing cloud folder in the mobile phone 100 may be updated by changing a type of the cloud folder, to implement a process of creating a target cloud folder of the target type.

Herein, for a manner of changing the type of the existing cloud folder, refer to the following.

Similar to that shown in FIG. 7 (in the manner 3, FIG. 7 is used to describe how to change a type of a cloud folder, but that the folder in FIG. 7 in the manner 2 may be a common folder or a cloud folder needs to be ignored), in a possible implementation, the user touches the cloud folder (that is, a folder #1), and performs a related operation (for example, a touch and hold operation or a touch operation) in a blank area in the cloud folder #1. After detecting the related operation performed by the user, the mobile phone 100 obtains at least one cloud folder type from the server or the operating system of the mobile phone 100, and displays the at least one cloud folder type. Then, based on a target type selected by the user from the at least one cloud folder type, the mobile phone 100 updates the current cloud folder to a target cloud folder of the target type.

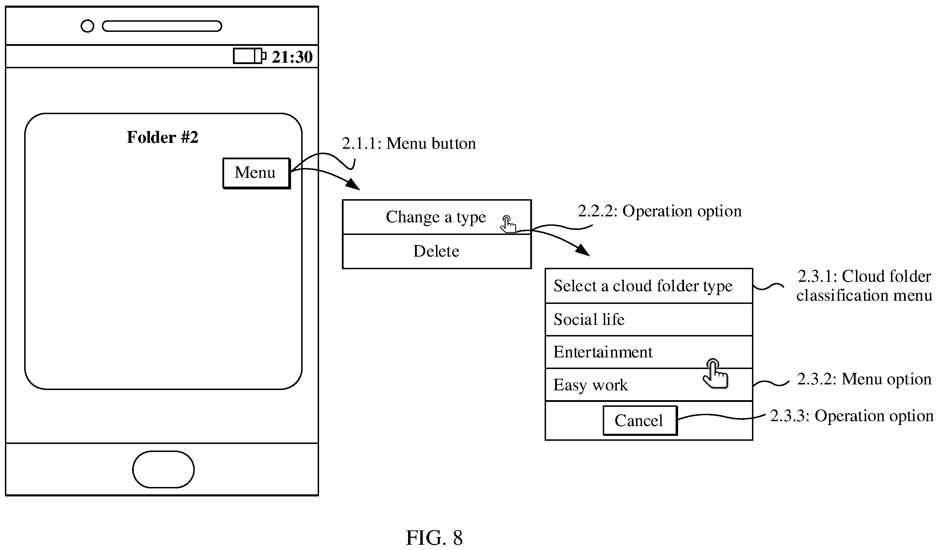

As shown in FIG. 8, in another implementation, a menu option for changing a type of a cloud folder is provided in an existing cloud folder (for example, a folder #2). The user touches the menu option in the folder #2. After detecting the touch operation (for example, a touch and hold operation or a touch operation) performed by the user on the menu option for changing a type of a cloud folder, the mobile phone 100 obtains a menu including at least one cloud folder type from the server or the operating system of the mobile phone 100, and pops up the menu. Further, the mobile phone 100 detects a target type selected by the user, determines that the user needs to change a type of the currently operated cloud folder, and therefore updates the current cloud folder to a target cloud folder of the target type.

Step S231: After creating the target cloud folder, display the target cloud folder.

Specifically, the processor 180 creates the cloud folder of the target type (that is, the target cloud folder) according to the first operation instruction, and adds an icon of the target folder to a desktop of the mobile phone 100, that is, controls, by using the display controller 173, the display 140 to display the icon of the target folder on the display 140, so that the user can conveniently manage a related application by using the icon of the target cloud file.

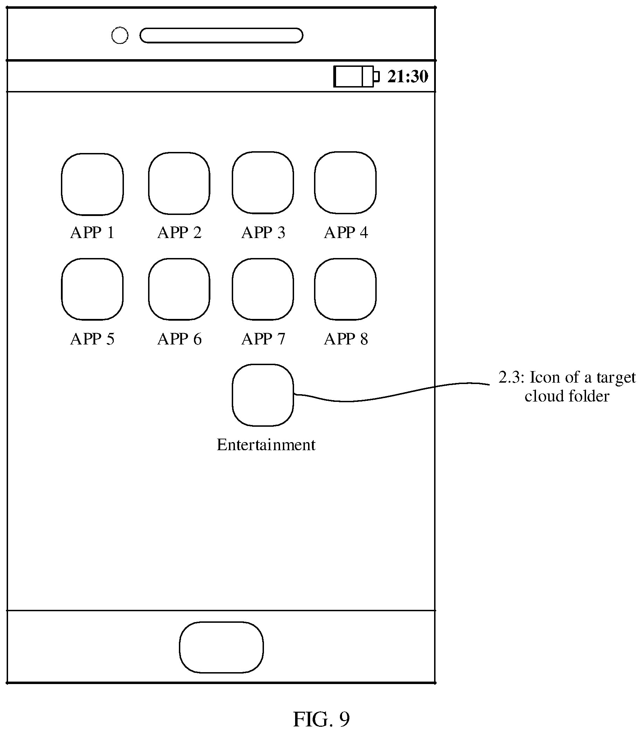

FIG. 9 is a schematic diagram of another human-computer interaction interface according to an embodiment of this application. As shown in FIG. 9, when the target type selected by the user from the at least one type shown in FIG. 5, FIG. 6, FIG. 7, or FIG. 8 is "Entertainment", the processor 180 creates the target cloud folder of the target type, and displays the icon of the target cloud folder on the display 140 by using the display controller 173. In this way, a new icon, that is, the icon of the target cloud folder "Entertainment", is added to the human-computer interaction interface of the display 140.

Step S232: After creating the target cloud folder, to avoid loss of a parameter of the target cloud folder after the operating system of the mobile phone 100 is restarted, store the parameter of the target cloud folder. The parameter includes at least one of the following: a name of the target cloud folder, a type of the target cloud folder, a sequence number of the target cloud folder on the display, or a location of the target cloud folder on the display.

The sequence number of the target cloud folder on the display 140 may be understood as a message used to identify a location of the target cloud folder on the desktop of the terminal device. Specifically, each operation object has a corresponding location on the display 140. To be specific, the location is two-dimensional coordinates of the operation object on the display. Coordinates of an area on the display determine an operation object. When the user performs a related operation on an operation object, the touch panel 142 of the display 140 detects the related operation at a location corresponding to the operation object, so that the processor 180 can determine the related operation of the user or a behavior of the user based on a detection signal at the corresponding location, so as to output corresponding content to the user. Therefore, when the user performs a related operation on the target cloud folder, the mobile phone 100 can determine that an operation object on which the user performs the related operation is the target cloud folder.

In a possible implementation, for the user to conveniently identify the target cloud folder, the type of the target cloud folder may be used as the name of the target cloud folder. Still as shown in FIG. 7, if the type of the target cloud folder is "Entertainment", the name of the target cloud folder is also "Entertainment".

The following describes various function buttons in the target cloud folder in detail.

The target cloud folder includes a recommend switch. Optionally, the target cloud folder further includes at least one of a refresh button or an add button.

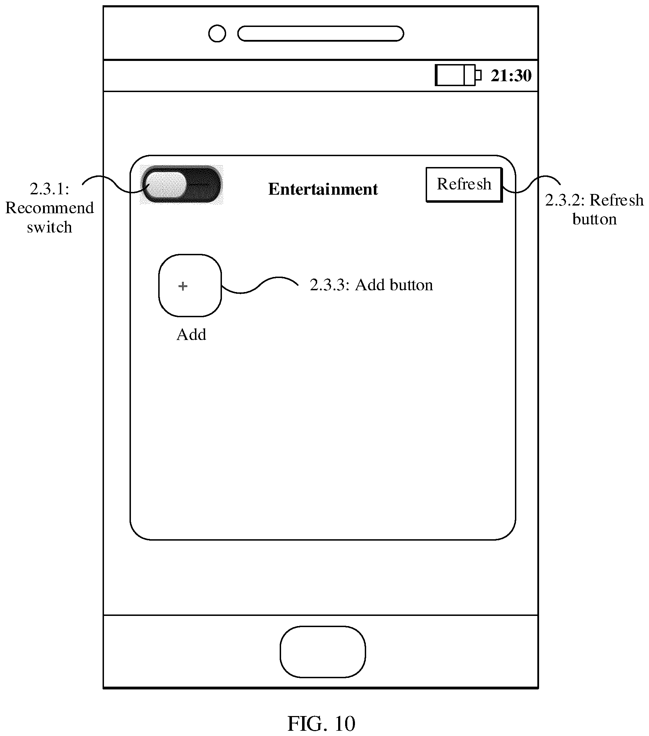

FIG. 10 is a schematic diagram of a human-computer interaction interface after a target cloud folder is opened according to an embodiment of this application. As shown in FIG. 10, after the target cloud folder "Entertainment" is opened, three function icons are displayed on a human-computer interaction interface: the recommend function indicated by 2.3.1, the refresh button indicated by 2.3.2, and the add button indicated by 2.3.3.

The following briefly describes a function of each function icon.

Recommend switch: used to control whether to display an application. In other words, the recommend switch is used to control whether to perform an action of obtaining an application. Specifically, when the recommend switch is turned on, the mobile phone 100 displays an application by using the display 140, in other words, the mobile phone 100 performs an action of obtaining an application; or when the recommend switch is turned off, the mobile phone 100 does not display an application, in other words, the mobile phone 100 does not perform an action of obtaining an application, and in this case, the cloud folder changes to a common folder and does not have a function of recommending an application.

Refresh button: used to control whether to update an application. In other words, the refresh button is used to control whether to perform an action of obtaining an application in real time. Specifically, when the refresh button is enabled, the mobile phone 100 displays an application in real time by using the display 140, in other words, the mobile phone 100 performs an action of obtaining an application in real time; or when the refresh button is disabled, the mobile phone 100 does not display an application, in other words, the mobile phone 100 does not perform an action of obtaining an application in real time.

Add button: used to add a locally installed application from outside the target folder to the target folder.

The foregoing describes in detail, by using steps S210 to S232, a specific process of creating the target cloud file. The following describes in detail, by using step S240 and step S250, a process of installing an application based on the target cloud folder in this embodiment of this application.

Step S240: Obtain at least one application that is associated with the target type and that is pushed by the server, and display the at least one application in the target folder.

Specifically, in this embodiment of this application, a most significant functional feature of the cloud folder lies in the classification and recommendation functions. Therefore, the processor 180 may obtain, based on the target type and by exchanging information with the server, at least one application associated with the target type, so as to control, by using the display controller 173, the display 140 to display the at least one application in the target cloud folder.

In this embodiment of this application, an application pushed by the mobile phone 100 based on the target type may be referred to as a recommended application.

The "at least one application associated with the target type" may be understood as that functions of the at least one application may be all classified into the target type.

Herein, the mobile phone 100 obtains the application based on the target type, and displays the at least one application in the target cloud folder by using the display 140. This can not only well reflect the classification and recommendation functions of the could folder, but also improve user experience. For example, if the target type is "Entertainment", the at least one application obtained by the processor 180 based on "Entertainment" may be applications such as Tencent Video and Kugou Music.

In this embodiment of this application, the at least one application may be displayed on the display 140 as an icon.

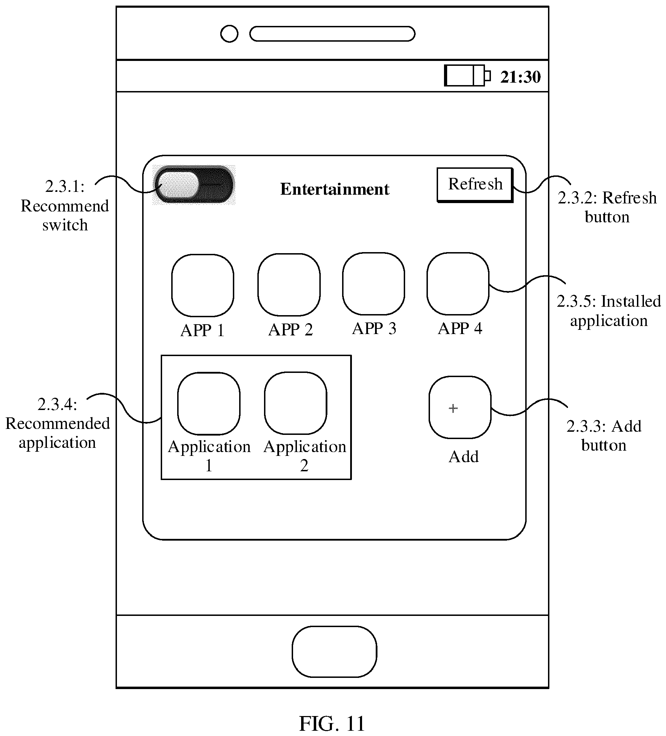

As shown in FIG. 11, an application icon indicated by 2.3.5 is an icon of an application that has been installed in the target cloud folder, and application icons indicated by 2.3.4 are icons of applications pushed by the server.

In this embodiment of this application, the terminal device may use a related operation behavior of the user as a trigger condition for obtaining the at least one application. Therefore, in a possible implementation, after detecting, on the display 140, a fourth operation instruction entered by the user for the target cloud folder, the terminal device obtains the at least one application that is associated with the target type and that is pushed by the server, and displays the at least one application in the target cloud folder.

The fourth operation instruction may be an instruction of a touch operation performed by the user on the target cloud folder. The touch operation may be a touch and hold operation, a flick operation, a touch operation, or the like. Alternatively, the fourth operation instruction may be a voice instruction entered by the user by using the microphone 162. Any operation instruction capable of enabling the user to interact with the terminal device falls within the protection scope of the embodiments of this application. This is not limited in this embodiment of this application.

By using an example in which the fourth operation instruction is an instruction of a touch operation, the following describes in detail, in three cases by using the recommend switch and the refresh button that are included in the target cloud folder, a process in which after detecting, on the display 140, the fourth operation instruction entered by the user for the target cloud folder, the mobile phone 100 obtains the at least one application that is associated with the target type and that is pushed by the server.

### Case 1

The recommend switch is automatically turned on when the user touches the target cloud folder. Correspondingly, after detecting the touch operation performed by the user on the target cloud folder on the display 140, the mobile phone 100 can obtain the at least one application.

### Case 2

The user touches the target cloud folder and turns on the recommend switch. Correspondingly, after detecting the touch operation performed by the user on the recommend switch in the target cloud folder on the display 140, the mobile phone 100 can obtain the at least one application. Herein, the touch operation performed by the user on the target cloud folder may be understood as the touch operation specifically performed on the recommend switch in the target cloud folder.

### Case 3

The user touches the target folder, turns on the recommend switch, and touches the refresh button. Correspondingly, when detecting an operation that the user touches the target cloud folder, that a status of the recommend switch is on, and an operation that the user touches the refresh button, the mobile phone 100 can obtain the at least one application from the server. Herein, the touch operation performed by the user on the target cloud folder may be understood as the touch operation specifically performed on the refresh button in the target cloud folder.

It should be understood that when the user touches the target folder and the recommend switch is turned on, each time the user touches the refresh button, the mobile phone 100 detects an operation performed by the user on the refresh button, and also obtains the at least one application from the server, that is, the mobile phone 100 recommends, to the user based on a real-time operation performed by the user on the refresh button, an application refreshed in real time.

The following describes a process of obtaining the at least one application by the mobile phone 100:
sending a second request message to a network device, where the second request message includes the target type; and
receiving a second response message that is sent by the server based on the second request message, where the second response message is used to indicate the at least one application.

Specifically, the mobile phone 100 may send the second request message to the server. After receiving the second request message, the server obtains the at least one application from a network, and sends, to the mobile phone 100 by using a network interface in the server, the second response message used to indicate the at least one application.

It should be noted that in specific implementation, the server obtains a uniform resource locator (uniform resource locator, URL) of an icon of each application. Icon is an icon format, and is used for a system icon, a software icon, or the like. Icons of common software or on a Windows desktop are usually in the icon format. A URL is a concise representation of a location and an access method of a resource that can be obtained from the Internet, and is a standard resource address on the Internet. Each file on the Internet has a unique URL. Information included in the URL indicates a location of the file and how a browser should handle the URL.

It should be further noted that when the user touches the target folder or the refresh button, after detecting a related operation and obtaining the at least one application, the mobile phone 100 replaces an icon of an application previously recommended by the mobile phone 100 to the user.

Optionally, the second request message may further include personal information of the user.

The personal information of the user may include information such as a current location of the user and a use preference of the user (for example, a type of a web page that the user likes to browse).

S250: In response to a second operation instruction that the user selects a target application from the at least one application, install the target application.

In a possible implementation, in response to the second operation instruction, a download link used for downloading the target application is displayed on the display;
in response to a touch operation performed on the download link of the target application, the target application is installed; and
the target application is displayed on the display.

The second operation instruction may be a touch operation performed by the user for the target application. The touch operation may be a touch and hold operation, a flick operation, a touch operation, or the like. Any operation instruction capable of enabling the user to interact with the terminal device falls within the protection scope of the embodiments of this application. This is not limited in this embodiment of this application.

Specifically, in the at least one application displayed on the display 140, the user touches an icon of one or more applications (that is, the target application) by using a touch operation. According to the detected second operation instruction, the mobile phone 100 pops up descriptive information about the target application on the display 140. The descriptive information about the target application includes at least the download link of the target application. Further, the user touches the download link of the target application by using a touch operation. Correspondingly, the mobile phone 100 installs the target application based on the detected touch operation performed on the download link of the target application. In a possible implementation, descriptive information about an application may further include a name of the application, a size of storage space occupied by the application, permission required for downloading the application, an icon URL of the application, and a developer of the application.

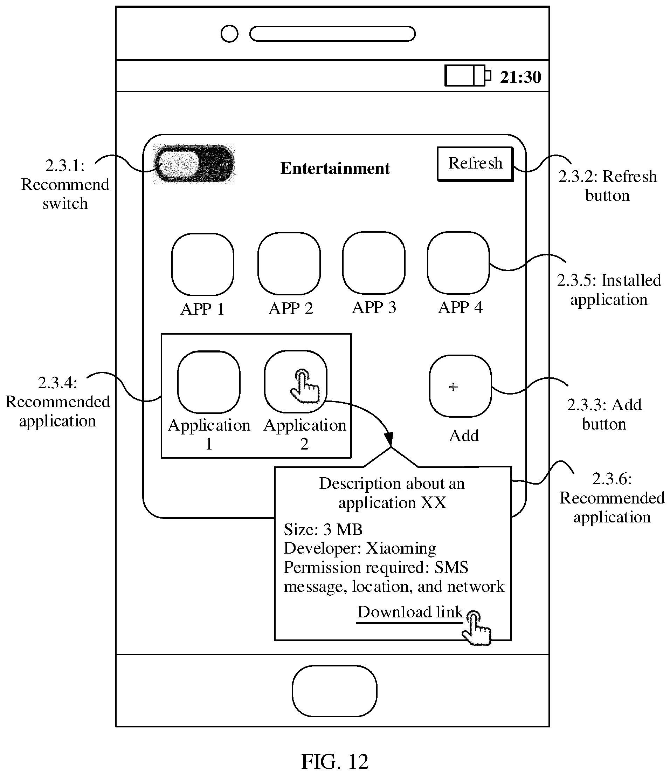

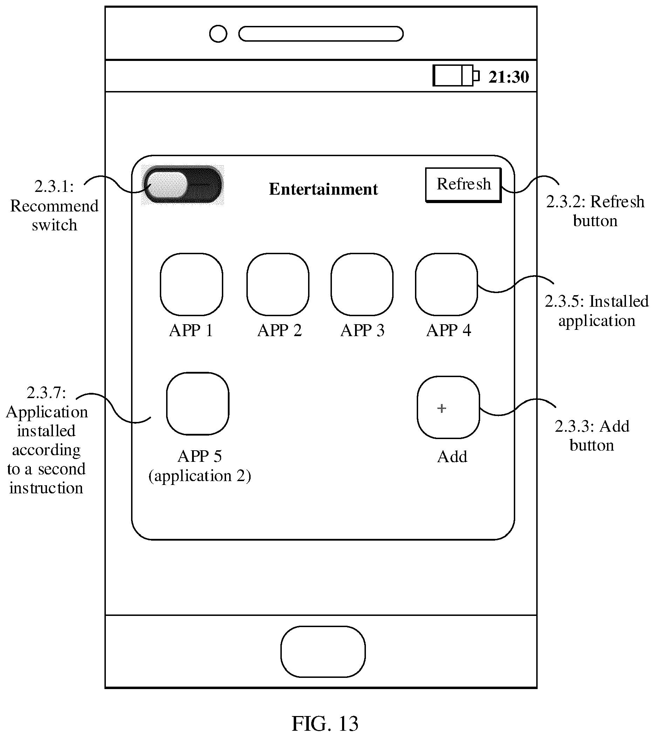

FIG. 12 and FIG. 13 are schematic diagrams of another human-computer interaction interface of a target cloud file according to an embodiment of this application. As shown in FIG. 12, after the user touches the target application (for example, an application 2), the display 140 pops up descriptive information about the application 2 indicated by 2.3.6. The descriptive information includes a size of storage space occupied by the application 2, a developer of the application 2, permission required for downloading the application 2, and a download address of the application 2. In addition, after the user touches a download link of the target application, the mobile phone 100 installs the target application based on the touch operation performed by the user on the download link of the target application. As shown in FIG. 13, APP 1 to APP 4 are previously locally installed applications, and the application 2 indicated by 2.3.7 is the target application downloaded and installed by the mobile phone 100 based on the operation of the user in FIG. 10.

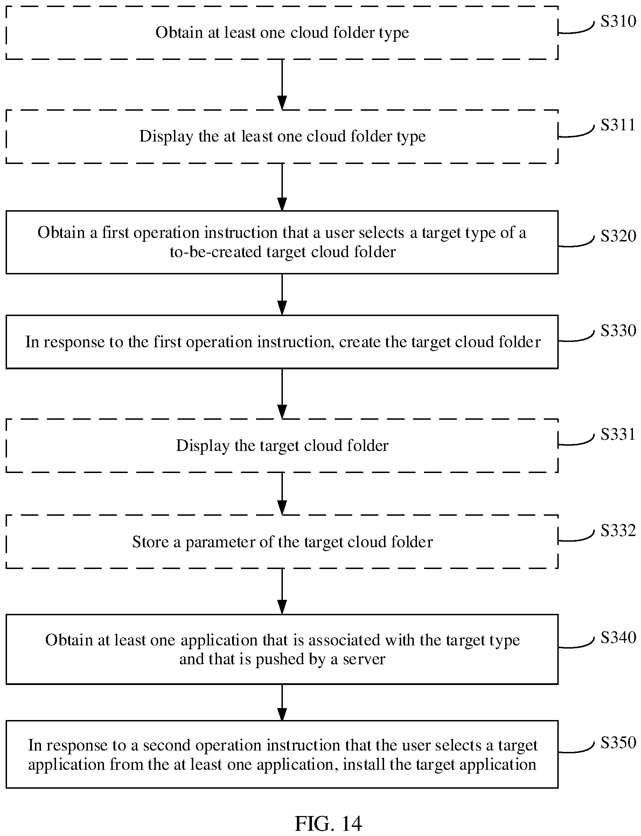

The following separately describes, by using FIG. 14 to FIG. 16, the embodiments of this application from perspectives of the three manners of creating the target cloud folder.

FIG. 14 is a schematic flowchart of an application processing method 300 for a terminal device according to another embodiment of this application. The method 300 is an embodiment described based on a process of creating a target cloud folder. The following describes each step.

Step S310: Obtain at least one cloud folder type.

The mobile phone 100 may obtain the at least one cloud folder type in two manners.

In a first manner, a user may enter an operation instruction (denoted as an operation instruction #A1 for ease of distinguishing and understanding) by using an input device. After detecting the operation instruction #A1, the mobile phone 100 may obtain the at least one cloud folder type from a server. Specifically, the mobile phone 100 may send, to the server, a first request message used to request the at least one cloud folder type. The server pushes the at least one cloud folder type to the mobile phone 100 based on the first request message.

Herein, the operation instruction #A1 may be an instruction of a touch operation performed by the user in a blank area on the display 140. The touch operation may be a touch and hold operation, a flick operation, a touch operation, or the like. Alternatively, the operation instruction #A1 may be a voice instruction entered by the user by using the microphone 162. Any operation instruction capable of enabling the user to interact with the terminal device falls within the protection scope of the embodiments of this application. This is not limited in this embodiment of this application.

For example, referring to FIG. 3, the operation instruction #A1 shown in FIG. 3 is an instruction of a touch and hold operation.

In a second manner, the user may enter an operation instruction (denoted as an operation instruction #A2 for ease of distinguishing and understanding) by using an input device. After detecting the operation instruction #A2, the mobile phone 100 may obtain the at least one cloud folder type pre-stored in the mobile phone 100.

Herein, the operation instruction #A2 may be an instruction of a touch operation performed by the user in a blank area on the display 140. The touch operation may be a touch and hold operation, a flick operation, a touch operation, or the like. The operation instruction #A2 may be an instruction of a touch operation performed by the user on a pre-provided icon. The touch operation may be a touch and hold operation, a touch operation, or the like. Alternatively, the operation instruction #A2 may be a voice instruction entered by the user after the user touches a pre-provided icon, or the like. Any operation instruction capable of enabling the user to interact with the terminal device falls within the protection scope of the embodiments of this application. This is not limited in this embodiment of this application.

For example, referring to FIG. 4, the operation instruction #A1 shown in FIG. 4 is an instruction of a touch operation performed by the user on a pre-provided icon.

It should be noted that the operation instruction #A1 and the operation instruction #A2 may correspond to the third operation instruction in the method 200.

Step S311: Display the at least one cloud folder type.

As shown in FIG. 5, it is assumed that after detecting a touch operation (for example, a touch and hold operation), indicated by 2.1.1, performed by the user in a blank area on the display 140, the mobile phone 100 may obtain at least one cloud folder type from the server or an operating system of the mobile phone 100, and control, by using the display controller 173, the display 140 to display the cloud folder classification menu, that is, pop up a cloud folder classification menu indicated by 2.2.1. The cloud folder classification menu indicates three cloud folder types: social life, entertainment, and easy work.

Still as shown in FIG. 6, it is assumed that after detecting a touch operation (for example, a touch operation) performed by the user on a pre-provided icon "Settings" of a system, the mobile phone 100 pops up, on the display 140, a settings menu indicated by 2.1.3; after detecting a touch operation performed by the user on "Cloud folder", the mobile phone 100 pops up at least one operation option including 2.1.5; and after detecting a touch operation performed by the user on a "Create" option, the mobile phone 100 pops up a cloud folder classification menu indicated by 2.2.1. The cloud folder classification menu indicates three cloud folder types: social life, entertainment, and easy work.

As an example instead of a limitation, the mobile phone 100 may alternatively output the at least one cloud folder type through a voice by using the loudspeaker 161, and does not need to display the at least one cloud folder type on the display.

Step S320: Obtain a first operation instruction that the user selects a target type of a to-be-created target cloud folder.

To be specific, the user may select the target type from the at least one cloud folder type output by the mobile phone 100 (displayed on the display or output by a sound control device or the like), and enter the first operation instruction by using the input device. The processor 180 in the mobile phone 100 obtains the first operation instruction by using the input device.

For a specific description of obtaining the first operation instruction in step S320, refer to a description of step S220 in the method 200. For brevity, details are not described herein again.

For example, referring to FIG. 5, the first operation instruction is obtained by detecting a touch operation performed by the user on "Entertainment" on the cloud folder classification menu.

Step S330: In response to the first operation instruction, create the target cloud folder.

To be specific, the mobile phone 100 creates a new cloud folder (that is, the target cloud folder) (or a cloud folder that does not exist in the mobile phone 100) in the mobile phone 100 based on the target type.

For a specific description of step S330, refer to a description of creating a target cloud folder in the manner 1 in step S230 in the method 200.

Step S331: Display the target cloud folder.

After creating the target cloud folder, the mobile phone 100 displays the target cloud folder on the display 140, so that the user can conveniently perform a related operation on the target cloud folder.

For example, referring to FIG. 9, assuming that the target type selected by the user is "Entertainment", after the target cloud folder is created, a target cloud folder of the "Entertainment" type is added on the display 140.

For example, referring to FIG. 10, the target cloud folder includes a recommend switch, a refresh button, or an add button.

Step S332: After creating the target cloud folder, store a parameter of the target cloud folder. The parameter includes at least one of the following: a name of the target cloud folder, a type of the target cloud folder, a sequence number of the target cloud folder on the display, or a location of the target cloud folder on the display.

For descriptions of the parameters, refer to descriptions of the parameters in the method 200. To avoid repetition, details are not described herein again.

Step S340: Obtain at least one application that is associated with the target type and that is pushed by the server.

Specifically, the user may enter a related operation instruction (for example, a fourth operation instruction) for the target cloud file. After detecting the fourth operation instruction of the user, the mobile phone 100 obtains, from the server, the at least one application associated with the target type. To be specific, the mobile phone 100 sends, to the server, a second request message used to indicate the at least one application, and the server feeds back the at least one application based on the second request message. The fourth operation instruction may be an instruction of a touch operation performed by the user on the target cloud folder. The touch operation may be a touch and hold operation, a flick operation, a touch operation, or the like. Alternatively, the fourth operation instruction may be a voice instruction entered by the user by using the microphone 162.

For a specific description of step S340, refer to a specific description of step S240 in the method 200. For brevity, details are not described herein again.

For example, referring to FIG. 11, an application icon indicated by 2.3.5 is an icon of an application that has been installed in the target cloud folder, and application icons indicated by 2.3.4 are icons of applications pushed by the server.

Step S350: In response to a second operation instruction that the user selects a target application from the at least one application, install the target application.

To be specific, the user selects the target application from the at least one application output by the mobile phone 100, and enters the second operation instruction by using the input device. After detecting the second operation instruction, the mobile phone 100 downloads and installs the target application according to the second operation instruction. The second operation instruction may be an instruction of a touch operation performed by the user. The touch operation may be a touch and hold operation, a flick operation, a touch operation, or the like. Alternatively, the operation instruction #C may be a voice instruction entered by the user by using the microphone 162.

For a specific description of step S350, refer to a specific description of step S250 in the method 200. For brevity, details are not described herein again.

For example, as shown in FIG. 12, after the user touches the target application (for example, an application 2), the display 140 pops up descriptive information about the application 2 indicated by 2.3.6. The descriptive information includes a size of storage space occupied by the application 2, a developer of the application 2, permission required for downloading the application 2, and a download address of the application 2. Further, after the user touches a download link of the target application, the mobile phone 100 installs the target application based on the operation performed by the user on the download link of the target application. As shown in FIG. 13, APP 1 to APP 4 are previously locally installed applications, and the application 2 indicated by 2.3.7 is the target application downloaded and installed by the mobile phone 100 based on the operation of the user in FIG. 10.

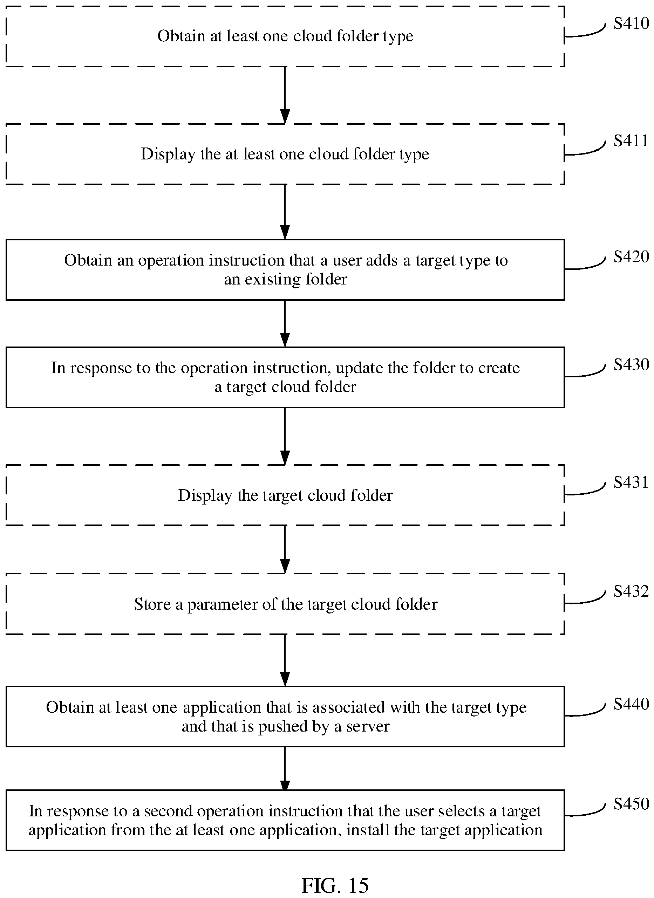

FIG. 15 is a schematic flowchart of an application processing method 400 for a terminal device according to another embodiment of this application.

The method 400 is an embodiment described based on a process of creating a target cloud folder by adding a target type to an existing folder. The existing folder in the mobile phone 100 may be a common folder without classification and recommendation functions, or may be a cloud folder with only a recommendation function. The following describes each step.

Step S410: Obtain at least one cloud folder type.

For example, referring to FIG. 7, a user may perform a touch operation (for example, a touch and hold operation or a touch operation), indicated by 2.1.1, in a blank area in an existing file (for example, a folder #1). After detecting an instruction of the touch operation, the mobile phone 100 may obtain the at least one cloud folder type from a server or an operating system of the mobile phone 100.

Step S411: Display the at least one cloud folder type.

For example, still referring to FIG. 7, it is assumed that after detecting the touch operation (for example, a touch and hold operation), indicated by 2.1.1, performed by the user in the blank area in the folder #1, the mobile phone 100 may obtain the at least one cloud folder type from the server or the operating system of the mobile phone 100, and control, by using the display controller 173, the display 140 to display the cloud folder classification menu, that is, pop up a cloud folder classification menu indicated by 2.2.1. The cloud folder classification menu indicates three cloud folder types: social life, entertainment, and easy work.

As an example instead of a limitation, the mobile phone 100 may alternatively output the at least one cloud folder type through a voice by using the loudspeaker 161, and does not need to display the at least one cloud folder type on the display.

Step S420: Obtain an operation instruction that the user adds a target type to the existing folder.

To be specific, the user may select the target type from the at least one cloud folder type output by the mobile phone 100 (displayed on the display or output by a sound control device or the like), to instruct the mobile phone 100 to add the target type to the existing folder. The processor 180 in the mobile phone 100 obtains the operation instruction by using an input device.

For example, still referring to FIG. 7, the operation instruction is obtained by detecting a touch operation performed by the user on "Entertainment" on the cloud folder classification menu.

Step S430: In response to the operation instruction, update, by adding the target type to the existing folder, the existing folder to create a target cloud folder.

In a possible implementation, the folder is a common folder without classification and recommendation functions. In this case, a switch option used to enable or disable a recommendation function may be added to the common folder, to convert the common folder into a cloud folder with only a pushing function (although the pushing function is provided, applications pushed by the server include various types). In addition, the target type may be added to the cloud folder with only the pushing function, so that the cloud folder with only the pushing function is further updated to a target cloud folder that can recommend an application based on the target type.

In another possible implementation, the folder is a cloud folder with only a pushing function (although the pushing function is provided, applications pushed by the server include various types). The target type may be added to the cloud folder with only the pushing function, so that the cloud folder with only the pushing function is further updated to a target cloud folder that can recommend an application based on the target type.

For a specific description of step S430, refer to a description of creating a target cloud folder in the manner 2 in step S230 in the method 200.

Step S431: Display the target cloud folder.

Step S432: Store a parameter of the target cloud folder.

Step S440: Obtain at least one application that is associated with the target type and that is pushed by the server.

Step S450: In response to a second operation instruction that the user selects a target application from the at least one application, install the target application.

Herein, for specific descriptions of steps S431 to S450, refer to specific descriptions of steps S331 to S350 in the method 300, respectively. For brevity, details are not described herein again.

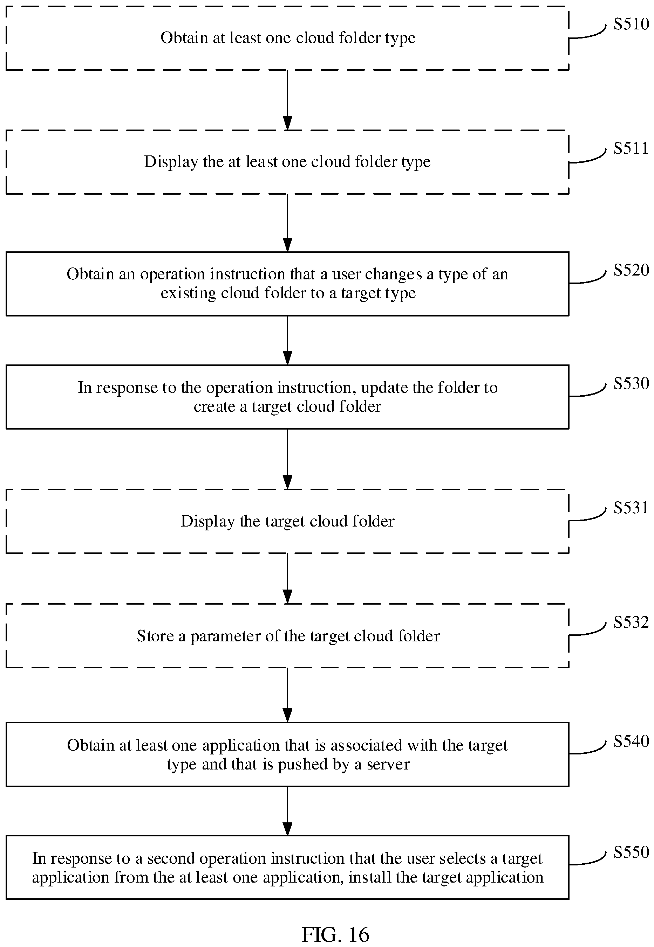

FIG. 16 is a schematic flowchart of an application processing method 500 for a terminal device according to another embodiment of this application.

The method 500 is an embodiment described based on a process of creating a target cloud folder by changing a target type in an existing cloud folder. The existing cloud folder in the mobile phone 100 is a cloud folder with classification and recommendation functions. The following describes each step.

Step S510: Obtain at least one cloud folder type.

For example, referring to FIG. 7, a user may perform a touch operation (for example, a touch and hold operation or a touch operation), indicated by 2.1.1, in a blank area in an existing cloud folder (for example, a folder #1). After detecting an instruction of the touch operation, the mobile phone 100 may obtain the at least one cloud folder type from a server or an operating system of the mobile phone 100.

For another example, referring to FIG. 8, a menu option for changing a type of a cloud folder is provided in an existing cloud folder (for example, a folder #2). The user touches the menu option in the folder #2. After detecting the touch operation (for example, a touch and hold operation or a touch operation) performed by the user on the menu option for changing a type of a cloud folder, the mobile phone 100 obtains a menu including at least one cloud folder type from the server or the operating system of the mobile phone 100, and pops up the menu.

Step S511: Display the at least one cloud folder type.

For example, still referring to FIG. 7, it is assumed that after detecting the touch operation (for example, a touch and hold operation or a touch operation), indicated by 2.1.1, performed by the user in the blank area in the folder #1, the mobile phone 100 may obtain the at least one cloud folder type from the server or the operating system of the mobile phone 100, and control, by using the display controller 173, the display 140 to display the cloud folder classification menu, that is, pop up a cloud folder classification menu indicated by 2.2.1. The cloud folder classification menu indicates three cloud folder types: social life, entertainment, and easy work.

For another example, still referring to FIG. 8, it is assumed that after detecting the touch operation performed by the user on the menu option for changing a type of a cloud folder, the mobile phone 100 obtains the menu including at least one cloud folder type from the server or the operating system of the mobile phone 100, and pops up the menu by using the display 140, that is, pops up a cloud folder classification menu indicated by 2.2.1. The cloud folder classification menu indicates three cloud folder types: social life, entertainment, and easy work.

As an example instead of a limitation, the mobile phone 100 may alternatively output the at least one cloud folder type through a voice by using the loudspeaker 161, and does not need to display the at least one cloud folder type on the display.

Step S520: Obtain an operation instruction that the user changes a type of the existing cloud folder to a target type.

To be specific, the user may select the target type from the at least one cloud folder type output by the mobile phone 100 (displayed on the display or output by a sound control device or the like), to instruct the mobile phone 100 to change the type of the existing cloud folder to the target type. The processor 180 in the mobile phone 100 obtains the operation instruction by using an input device.

For example, still referring to FIG. 7 or FIG. 8, the operation instruction is obtained by detecting a touch operation performed by the user on "Entertainment" on the cloud folder classification menu.

Step S530: In response to the operation instruction, update, by changing the type of the existing cloud folder to the target type, the existing folder to create a target cloud folder.

To be specific, after detecting the operation instruction from the user in the existing cloud folder, the mobile phone 100 determines that the user needs to change the type of the currently operated cloud folder, and therefore updates the current cloud folder to the target cloud folder of the target type.

For a specific description of step S530, refer to a description of creating a target cloud folder in the manner 3 in step S230 in the method 200.

Step S531: Display the target cloud folder.

Step S532: Store a parameter of the target cloud folder.

Step S540: Obtain at least one application that is associated with the target type and that is pushed by the server.

Step S550: In response to a second operation instruction that the user selects a target application from the at least one application, install the target application.

Herein, for specific descriptions of steps S531 to S550, refer to specific descriptions of steps S331 to S350 in the method 300, respectively. For brevity, details are not described herein again.

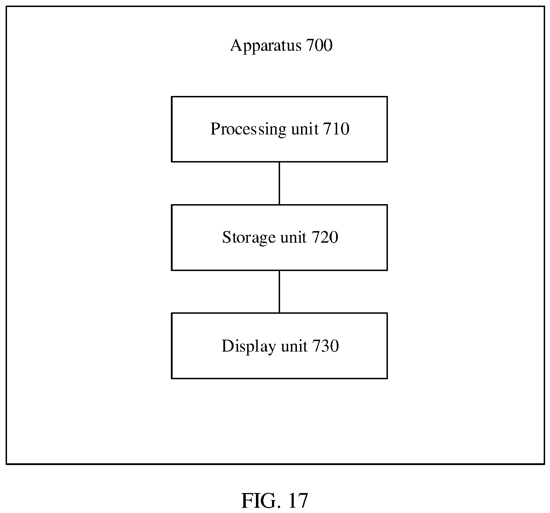

The foregoing describes in detail the application processing method in the embodiments of this application by using FIG. 2 to FIG. 16. The following separately describes an application processing terminal device and an application processing apparatus in the embodiments of this application with reference to FIG. 1 and FIG. 17. Technical features described in the method embodiments are also applicable to the following apparatus embodiments.

FIG. 17 shows an application processing apparatus 700 for a terminal device according to an embodiment of this application. As shown in FIG. 17, the apparatus 700 includes a processing unit 710, a storage unit 720, and a display unit 730. The processing unit 710 is configured to:
obtain a first operation instruction that a user selects a target type of a to-be-created target cloud folder;
in response to the first operation instruction, create the target cloud folder associated with the target type;
obtain at least one application that is associated with the target type and that is pushed by a server, and display the at least one application in the target cloud folder; and
in response to a second operation instruction that the user selects a target application from the at least one application, install the target application.

Therefore, the apparatus provided in this embodiment of this application creates the target cloud folder of the target type according to the first operation instruction that the user selects the target type; pushes the at least one application to the user based on the target type; and installs the target application according to the second operation instruction that the user selects the target application from the at least one application. On the one hand, the cloud folder associated with the target type can be created without re-installing an operating system of the terminal device or restoring factory settings; and on the other hand, a problem that there are miscellaneous applications in a non-preinstalled cloud folder is avoided, thereby effectively implementing classification and recommendation functions of the cloud folder, and improving user experience.

In a possible implementation, the processing unit 710 is further configured to:
obtain at least one cloud folder type, where the target type is a type selected by the user from the at least one cloud folder type.

Therefore, the apparatus provided in this embodiment of this application provides the at least one cloud folder type for the user to select from, so that the user can conveniently determine a cloud folder type, thereby improving user experience.

In a possible implementation, the processing unit 710 is specifically configured to:
obtain the at least one cloud file type from the server.

Therefore, the apparatus provided in this embodiment of this application obtains the at least one cloud folder type from the server, so that the target type that is of the target cloud folder and that is selected by the terminal device is a cloud folder type supported by the server, and it is convenient for the server to subsequently push at least one application associated with the target type.

In a possible implementation, the at least one cloud folder type is pushed by the server based on device information of the terminal device.

Therefore, for the apparatus provided in this embodiment of this application, the server may feed back the cloud folder type based on the device information of the terminal device, so that the fed-back cloud folder type matches a model of the terminal device, that is, the fed-back cloud folder type is a cloud folder type that can be supported by the terminal device.

In a possible implementation, the processing unit 710 is specifically configured to:
obtain the pre-configured at least one cloud folder type from the apparatus.

In a possible implementation, the processing unit 710 is specifically configured to:
after detecting a third operation instruction entered by the user, obtain the at least one cloud folder type.

Therefore, for the apparatus provided in this embodiment of this application, a manner of triggering, by using the third operation instruction entered by the user, the apparatus to obtain the cloud folder type is simple and convenient, and is easy to operate. Therefore, user experience is high.

In a possible implementation, the display unit 730 is further configured to:
display the at least one cloud folder type.

In a possible implementation, the processing unit 710 is specifically configured to:
in response to the first operation instruction, create the target cloud folder.

Therefore, for the apparatus provided in this embodiment of this application, a manner of creating the target cloud folder according to the first operation instruction that the user selects the target type of the to-be-created target cloud folder is simple and convenient, and is easy to implement. The cloud folder associated with the target type can be created without re-installing an operating system of the terminal device or restoring factory settings. Therefore, user experience is high.

In a possible implementation, the processing unit 710 is specifically configured to:
obtain an operation instruction that the user adds the target type to an existing folder; and
in response to the operation instruction that the user adds the target type to the existing folder, update the folder to create the target cloud folder.

In a possible implementation, the processing unit 710 is specifically configured to:
obtain an operation instruction that the user changes a type of an existing cloud folder to the target type; and
in response to the operation instruction that the user changes the type of the existing cloud folder to the target type, update the cloud folder to create the target cloud folder.

In a possible implementation, the storage unit 720 is further configured to:
store a parameter of the target cloud folder, where the parameter includes at least one of the following: a name of the target cloud folder, a type of the target cloud folder, a sequence number of the target cloud folder on the display of the terminal device, or a location of the target cloud folder on the display of the terminal device.

Therefore, for the apparatus provided in this embodiment of this application, after the target cloud folder is created, the parameter of the target cloud folder is stored, so that the parameter of the target cloud folder is not lost when a terminal device equipped with the apparatus is restarted.

In a possible implementation, the display unit 730 is further configured to:
display the target cloud folder.

In a possible implementation, the processing unit 710 is specifically configured to:
after detecting a fourth operation instruction entered by the user for the target cloud folder, obtain the at least one application that is associated with the target type and that is pushed by the server, and display the at least one application in the target cloud folder.

In a possible implementation, the processing unit 710 is specifically configured to:
in response to the second operation instruction, control the display unit 730 to display, on the display unit 730, a download link used for downloading the target application; and
in response to an operation performed on the download link of the target application, install the target application.

It should be understood that, sequence numbers of the foregoing processes do not mean execution sequences. The execution sequences of the processes should be determined according to functions and internal logic of the processes, and should not be construed as any limitation on the implementation processes of the embodiments of the present invention.

In an implementation process, steps in the foregoing methods can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or may be integrated into another system, or some features may be ignored or not be performed. In addition, the displayed or discussed mutual couplings or direct couplings or communications connections may be implemented by using some interfaces. The indirect couplings or communications connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application processing method for a terminal device, wherein the method comprises:
obtaining a first operation instruction that a user selects a target type of a to-be-created target cloud folder;
in response to the first operation instruction, creating the target cloud folder associated with the target type;
obtaining at least one application that is associated with the target type and that is pushed by a server, and displaying the at least one application in the target cloud folder; and
in response to a second operation instruction that the user selects a target application from the at least one application, installing the target application.

2. The method according to claim 1, wherein before the obtaining a first operation instruction that a user selects a target type of a to-be-created target cloud folder, the method further comprises:
obtaining at least one cloud folder type, wherein the target type is a type selected by the user from the at least one cloud folder type.

3. The method according to claim 2, wherein the obtaining at least one cloud folder type comprises:
obtaining the at least one cloud file type from the server.

4. The method according to claim 3, wherein the at least one cloud folder type is pushed by the server based on device information of the terminal device.

5. The method according to claim 2, wherein the obtaining at least one cloud folder type comprises:
obtaining the pre-configured at least one cloud folder type from the terminal device.

6. The method according to any one of claims 2 to 5, wherein the obtaining at least one cloud folder type comprises:
after detecting a third operation instruction entered by the user, obtaining the at least one cloud folder type.

7. The method according to any one of claims 2 to 6, wherein after the obtaining at least one cloud folder type, the method further comprises:
displaying the at least one cloud folder type on a display of the terminal device.

8. The method according to any one of claims 1 to 7, wherein the in response to the first operation instruction, creating the target cloud folder associated with the target type comprises:
in response to the first operation instruction, creating the target cloud folder.

9. The method according to any one of claims 1 to 7, wherein the obtaining a first operation instruction that a user selects a target type of a to-be-created target cloud folder comprises:
obtaining an operation instruction that the user adds the target type to an existing folder; and
the in response to the first operation instruction, creating the target cloud folder associated with the target type comprises:
in response to the operation instruction that the user adds the target type to the existing folder, updating the folder to create the target cloud folder.

10. The method according to any one of claims 1 to 7, wherein the obtaining a first operation instruction that a user selects a target type of a to-be-created target cloud folder comprises:
obtaining an operation instruction that the user changes a type of an existing cloud folder to the target type; and
the in response to the first operation instruction, creating the target cloud folder associated with the target type comprises:
in response to the operation instruction that the user changes the type of the existing cloud folder to the target type, updating the cloud folder to create the target cloud folder.

11. The method according to any one of claims 1 to 10, wherein after the in response to the first operation instruction, creating the target cloud folder associated with the target type, the method further comprises:
storing a parameter of the target cloud folder, wherein the parameter comprises at least one of the following: a name of the target cloud folder, a type of the target cloud folder, a sequence number of the target cloud folder on the display of the terminal device, or a location of the target cloud folder on the display of the terminal device.

12. The method according to any one of claims 1 to 11, wherein after the in response to the first operation instruction, creating the target cloud folder associated with the target type, the method further comprises:
displaying the target cloud folder on the display of the terminal device.

13. The method according to claim 12, wherein the obtaining at least one application that is associated with the target type and that is pushed by a server, and displaying the at least one application in the target cloud folder comprises:
after detecting a fourth operation instruction entered by the user for the target cloud folder, obtaining the at least one application that is associated with the target type and that is pushed by the server, and displaying the at least one application in the target cloud folder.

14. The method according to any one of claims 1 to 13, wherein the in response to a second operation instruction that the user selects a target application from the at least one application, installing the target application comprises:
in response to the second operation instruction, displaying, on the display of the terminal device, a download link used for downloading the target application; and
in response to an operation performed on the download link of the target application, installing the target application.

15. A terminal device, wherein the terminal device comprises a processor, a memory, and a display, and the processor is configured to:
obtain a first operation instruction that a user selects a target type of a to-be-created target cloud folder;
in response to the first operation instruction, create the target cloud folder associated with the target type;
obtain at least one application that is associated with the target type and that is pushed by a server, and display the at least one application in the target cloud folder; and
in response to a second operation instruction that the user selects a target application from the at least one application, install the target application.

16. The terminal device according to claim 15, wherein the processor is further configured to:
obtain at least one cloud folder type, wherein the target type is a type selected by the user from the at least one cloud folder type.

17. The terminal device according to claim 16, wherein the processor is specifically configured to:
obtain the at least one cloud file type from the server.

18. The terminal device according to claim 17, wherein the at least one cloud folder type is pushed by the server based on device information of the terminal device.

19. The method according to claim 16, wherein the processor is specifically configured to:
obtain the pre-configured at least one cloud folder type from the terminal device.

20. The terminal device according to any one of claims 16 to 19, wherein the processor is specifically configured to:
after detecting a third operation instruction entered by the user, obtain the at least one cloud folder type.

21. The terminal device according to any one of claims 16 to 20, wherein the display is configured to:
display the at least one cloud folder type.

22. The terminal device according to any one of claims 15 to 21, wherein the processor is specifically configured to:
in response to the first operation instruction, create the target cloud folder.

23. The terminal device according to any one of claims 15 to 21, wherein the processor is specifically configured to:
obtain an operation instruction that the user adds the target type to an existing folder; and
in response to the operation instruction that the user adds the target type to the existing folder, update the folder to create the target cloud folder.

24. The terminal device according to any one of claims 15 to 21, wherein the processor is specifically configured to:
obtain an operation instruction that the user changes a type of an existing cloud folder to the target type; and
in response to the operation instruction that the user changes the type of the existing cloud folder to the target type, update the cloud folder to create the target cloud folder.

25. The terminal device according to any one of claims 15 to 24, wherein the memory is configured to:
store a parameter of the target cloud folder, wherein the parameter comprises at least one of the following: a name of the target cloud folder, a type of the target cloud folder, a sequence number of the target cloud folder on the display of the terminal device, or a location of the target cloud folder on the display of the terminal device.

26. The terminal device according to any one of claims 15 to 25, wherein the display is further configured to:
display the target cloud folder.

27. The terminal device according to claim 26, wherein the processor is specifically configured to:
after detecting a fourth operation instruction entered by the user for the target cloud folder, obtain the at least one application that is associated with the target type and that is pushed by the server, and display the at least one application in the target cloud folder.

28. The terminal device according to any one of claims 15 to 27, wherein the processor is specifically configured to:
in response to the second operation instruction, control the display to display, on the display, a download link used for downloading the target application; and
in response to an operation performed on the download link of the target application, install the target application.

29. A computer readable storage medium, wherein the computer readable storage medium stores a computer program, and when the computer program runs on a computer, the computer is enabled to perform the method according to any one of claims 1 to 14.

30. A computer program, wherein when the computer program runs on a computer, the computer is enabled to perform the method according to any one of claims 1 to 14.
